# EUROPEAN PATENT APPLICATION

(11) **EP 3 306 458 A1**
(43) Date of publication of application: **11.04.2018**
(21) Application number: 16803085.6
(22) Date of filing: 20.05.2016
(51) Int. Cl.: G06F 3/0484, G06F 3/0488, G06T 11/80, H04N 1/387

(54) **INFORMATION PROCESSING DEVICE, IMAGE DISPLAY METHOD, AND PROGRAM**

(30) Priority: 04.06.2015 JP 2015113799
(71) Applicant: Ricoh Company, Ltd., Tokyo 143-8555 (JP)
(72) Inventor: KEMMOCHI, Eiji, Tokyo 143-8555 (JP); KASATANI, Kiyoshi, Tokyo 143-8555 (JP)
(74) Representative: Schwabe - Sandmair - Marx
(86) International application number: PCT/JP2016/065017
(87) International publication number: WO 2016/194650

(57) **Abstract**

An information processing apparatus (2) for displaying objects on a display device (3), the information processing apparatus including: an operation accepting unit (25) configured to accept an operation directed to the objects; a coordinate changing unit (325) configured to change coordinates of constituting points of a plurality of objects among the objects, respectively, in a case where the operation accepted by the operation accepting unit is a scaling operation directed to the plurality of objects; and an object displaying unit (32) configured to display, on the display device, the plurality of objects whose coordinates of the constituting points have been changed by the coordinate changing unit.

## Description

### [Technical Field]

The present invention relates to an information processing apparatus, an image displaying method, and a program.

### [Background Art]

An electronic blackboard, which is provided with a function for taking in handwriting information based on handwriting on a visual surface of a display and displaying the handwriting information on a display, is known in the art. Contents that a user handwrites on a visual surface of an electronic blackboard are accumulated as coordinate data, and an electronic blackboard depicts a stroke, which is made by connecting coordinates, on a display. Therefore, a user can draw a character, figure, etc., similarly to a conventional white board. Further, a user can save handwriting information and transmit handwriting information to another electronic blackboard coupled via a network.

When handwriting on an electronic blackboard, a user may handwrite on almost the entire area of a display, but it is difficult to handwrite on an area larger than the display. Therefore, an electronic blackboard enabling to efficiently utilize the size of a display has been proposed (for example, see PLT 1). In PLT 1, an electronic blackboard that efficiently arranges visual contents such as a menu for selecting a color of a handwritten character, etc., is disclosed. According to disclosure of PLT 1, as visual contents are moved to an appropriate blank area, blank space for handwriting of a user can be increased.

### [Citation List]

### [Patent Literature]

[PLT 1] Japanese Patent No. 5625615

### [Summary of Invention]

### [Technical Problem]

However, in PLT 1, there is a problem that modification of handwriting information for an efficient use of the size of a display is not taken in consideration. For example, if handwriting information can be compressed through a simple operation by a user, blank space can be easily increased.

In view of the above issue, the aim of the present invention is to provide an information processing apparatus that enables to efficiently utilize the size of a display.

### [Solution to Problem]

In view of the above problem, the present invention provides an information processing apparatus for displaying objects on a display device, the information processing apparatus including: an operation accepting unit configured to accept an operation directed to the objects; a coordinate changing unit configured to change coordinates of constituting points of a plurality of objects among the objects, respectively, in a case where the operation accepted by the operation accepting unit is a scaling operation directed to the plurality of objects; and an object displaying unit configured to display, on the display device, the plurality of objects whose coordinates of the constituting points have been changed by the coordinate changing unit.

### [Advantageous Effects of Invention]

An information processing apparatus that enables to efficiently utilize the size of a display can be provided.

### [Brief Description of Drawings]

[FIG. 1] FIG. 1 is an example of a diagram illustrating an overall configuration of an image processing system according to a present embodiment;
[FIG. 2] FIG. 2 is an example of a diagram illustrating a hardware configuration of an electronic blackboard;
[FIG. 3] FIG. 3 is an example of a functional block diagram of an electronic blackboard 2;
[FIG. 4] FIG. 4 is an example of a functional block diagram of a file processing unit;
[FIG. 5] FIG. 5 is an example of a functional block diagram of a client unit and a server unit;
[FIG. 6] FIG. 6 is an example of a conceptual diagram illustrating page data;
[FIG. 7] FIG. 7 is an example of a conceptual diagram illustrating stroke arrangement data;
[FIG. 8] FIG. 8 is an example of a conception diagram illustrating coordinate arrangement data;
[FIG. 9] FIG. 9 is an example of a conceptual diagram illustrating media data;
[FIG. 10] FIG. 10 is an example of a conceptual diagram illustrating a remote license management table;
[FIG. 11] FIG. 11 is an example of a conceptual diagram illustrating an address book management table;
[FIG. 12] FIG. 12 is an example of a conceptual diagram illustrating backup data;
[FIG. 13] FIG. 13 is an example of a conceptual diagram illustrating a connection-destination management table;
[FIG. 14] FIG. 14 is an example of a conceptual diagram illustrating a participation-location management table;
[FIG. 15] FIG. 15 is an example of a conceptual diagram illustrating operation data;
[FIG. 16] FIG. 16 is an example of a drawing schematically illustrating a relation of superimposition of each image layer;
[FIG. 17] FIG. 17 is an example of a sequence diagram illustrating a process performed by each electronic blackboard;
[FIG. 18] FIG. 18 is an example of a sequence diagram illustrating a process performed by each electronic blackboard;
[FIG. 19] FIG. 19 is an example of a functional block diagram of a stroke processing unit;
[FIG. 20] FIG. 20 is a drawing illustrating an example of handwritten objects displayed on a display;
[FIG. 21] FIG. 21 is a drawing illustrating an example of handwritten objects in a state of being selected by a user;
[FIG. 22] FIG. 22 is a drawing illustrating an example of a displayed context menu;
[FIG. 23] FIG. 23 is a drawing illustrating an example of a context menu that is displayed in a case where a paste-buffer is not empty and an electronic pen is long-pressed inside a frame;
[FIG. 24A] FIG. 24A is a drawing illustrating an example of a context menu that is displayed in a case where an electronic pen is long-pressed outside a frame or without a frame;
[FIG. 24B] FIG. 24B is a drawing illustrating an example of a context menu that is displayed in a case where an electronic pen is long-pressed outside a frame or without a frame;
[FIG. 25A] FIG. 25A is an example of a drawing for explaining operations for copying and pasting;
[FIG. 25B] FIG. 25B is an example of a drawing for explaining operations for copying and pasting;
[FIG. 26] FIG. 26 is a drawing illustrating an example of handwritten objects pasted in a superimposed manner;
[FIG. 27A] FIG. 27A is an example of a drawing for explaining an operation for cutting;
[FIG. 27B] FIG. 27B is an example of a drawing for explaining an operation for cutting;
[FIG. 28] FIG. 28 is a drawing illustrating an example of a screen in a case where a paste-to-every-page command is selected by a user;
[FIG. 29A] FIG. 29A is an example of a drawing for explaining an operation for compression;
[FIG. 29B] FIG. 29B is an example of a drawing for explaining an operation for compression;
[FIG. 29C] FIG. 29C is an example of a drawing for explaining an operation for compression;
[FIG. 30A] FIG. 30A is an example of a drawing for explaining an operation for magnification;
[FIG. 30B] FIG. 30B is an example of a drawing for explaining an operation for magnification;
[FIG. 31] FIG. 31 is an example of a drawing for explaining coordinate arrangement data in a case where a copy command on a context menu is selected;
[FIG. 32] FIG. 32 is an example of a drawing for explaining coordinate arrangement data in a case where a compress command on a context menu is selected;
[FIG. 33A] FIG. 33A is a drawing illustrating an example of calling a context menu through a shortcut operation; and
[FIG. 33B] FIG. 33B is a drawing illustrating an example of calling a context menu through a shortcut operation.

### [Description of Embodiments]

The following description explains an embodiment of the present invention, with reference to drawings.

### <Overall System>

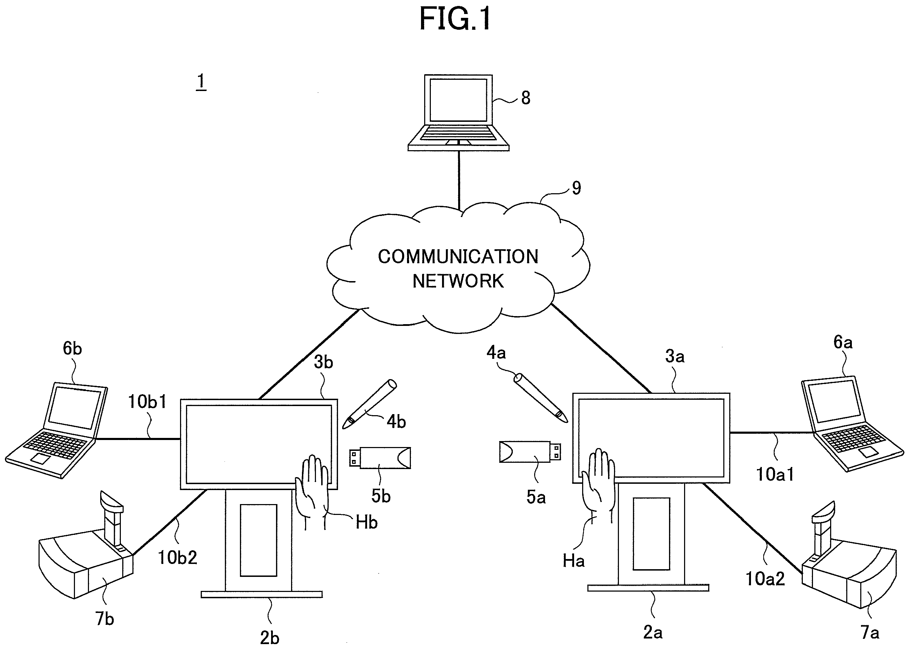

FIG. 1 is an overall configuration diagram illustrating an image processing system according to the present embodiment. Note that, in FIG. 1, two electronic blackboards 2a and 2b and accompanying electronic pens 4a and 4b, etc., are illustrated only for simplification of explanation. That is to say, three or more electronic blackboards or electronic pens, etc., may be utilized.

As illustrated in FIG. 1, an image processing system 1 includes multiple electronic blackboards 2a and 2b, multiple electronic pens 4a and 4b, universal serial bus (USB) memories 5a and 5b, laptop personal computers (PCs) 6a and 6b, tele-conferencing (or video-conferencing) terminals 7a and 7b, and a PC 8. Further, the electronic blackboards 2a and 2b are coupled communicably to the PC 8 via a communication network 9. Further, each of the multiple electronic blackboards 2a and 2b is provided with a display 3a or 3b (i.e., a display device such as a liquid crystal display, an organic electro-luminescent (EL) display, a projector, or a plasma television).

Further, the electronic blackboard 2a is able to display, on the display 3a, an image depicted based on events (i.e., touching the display 3a with the pen-tip of the electronic pen 4a or with the pen-end of the electronic pen 4a) generated by the electronic pen 4a. Note that it is possible to modify an image displayed on the display 3a, based on events (i.e., gestures such as magnifying, compressing, or turning a page, etc.) generated by a hand Ha, etc., of a user, in addition to by the electronic pen 4a.

Further, the USB memory 5a can be connected to the electronic blackboard 2a, so as to enable the electronic blackboard 2a to retrieve an electronic file in a format of PDF, etc., from the USB memory 5a and to record an electronic file in the USB memory 5a. Further, the electronic blackboard 2a is connected by the laptop PC 6a via a cable 10a1 for enabling communication based on a communication standard such as DisplayPort (registered trademark), Digital Visual Interface (DVI), High-Definition Multimedia Interface (HDMI; registered trademark), or Video Graphics Array (VGA). Further, the electronic blackboard 2a generates an event in response to contact that is made on the display 3a, and transmits event information, which is indicative of the event, to the laptop PC 6a, similarly to an event provided from an input device such as a mouse or a keyboard. Similarly, the tele-conferencing (or video-conferencing) terminal 7a is connected to the electronic blackboard 2a via a cable 10a2 for enabling communication based on a communication standard as described above. Note that the laptop PC 6a and the tele-conferencing terminal 7a may communicate with the electronic blackboard 2a via wireless communication that is compliant with a wireless communication protocol such as Bluetooth (registered trademark).

Additionally, at another location where the electronic blackboard 2b is installed, the electronic blackboard 2b provided with a display 3b, an electronic pen 4b, a USB memory 5b, a laptop PC 6, a tele-conferencing terminal 7b, a cable 10b1, and a cable 10b2 are utilized, similarly to the above. Further, an image displayed on the display 3b may be modified, based on an event generated by use of a hand Hb, etc., of a user.

Therefore, an image depicted on the display 3a of the electronic blackboard 2a at a location is displayed on the display 3b of the electronic blackboard 2b at another location. Contrarily, an image displayed on the display 3b of the electronic blackboard 2b at another location is displayed on the display 3a of the electronic blackboard 2a at a location. As described above, the image processing system 1 is highly useful for a conference, etc., held at remote locations because remote-sharing processing for sharing a common image at remote locations can be performed in the image processing system 1.

Note that, in the following description, an arbitrary electronic blackboard from among multiple electronic blackboards is referred to as an "electronic blackboard 2". An arbitrary display from among multiple displays is referred to as a "display 3". An arbitrary electronic pen from among multiple electronic pens is referred to as an "electronic pen 4". An arbitrary USB memory from among multiple USB memories is referred to as a "USB memory 5". An arbitrary laptop PC from among multiple laptop PCs is referred to as a "laptop PC 6". An arbitrary tele-conferencing terminal from among multiple tele-conferencing terminals is referred to as a "tele-conferencing terminal 7". An arbitrary hand from among hands of multiple users is referred to as a "hand H". An arbitrary cable from among multiple cables is referred to as a "cable 10".

Further, although an electronic blackboard is explained as an example of an image processing apparatus in the present embodiment, the image processing apparatus is not limited to an electronic blackboard. For another example, the image processing apparatus may be an electronic signboard (i.e., digital signage), a telestrator used for sport, a weather forecast, etc., or a remote image (video) diagnosis device, etc. Further, although a laptop PC 6 is explained as an example of an information processing terminal, the information processing terminal is not limited to a laptop PC 6. For another example, the information processing terminal may be a terminal capable of providing an image frame, such as a desktop PC, a tablet PC, a personal digital assistant (PDA), a digital video camera, a digital camera or a game machine. Further, the communication network includes the internet, a local area network (LAN), a cellular communication network, etc. Further, although a USB memory is explained as an example of a recording medium in the present embodiment, the recording medium is not limited to a USB memory. For another example, the recording medium may be various types of recording media such as a secure digital (SD) card, etc.

### <Hardware Configuration of an Electronic Blackboard>

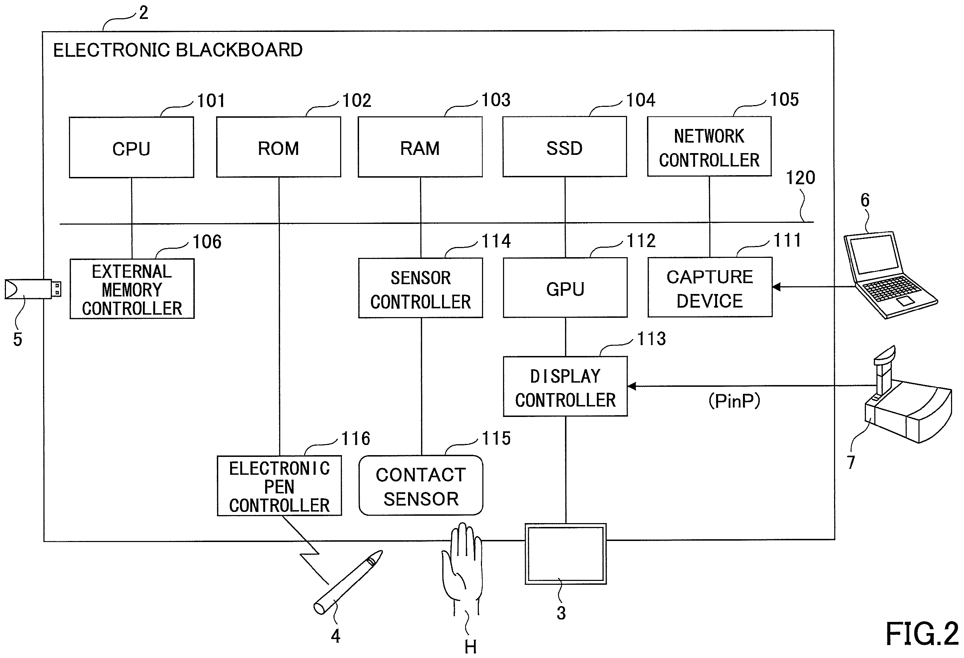

The following description explains a hardware configuration of an electronic blackboard according to the present embodiment, with reference to FIG. 2. Note that FIG. 2 is a diagram illustrating a hardware configuration of an electronic blackboard.

As illustrated in FIG. 2, an electronic blackboard 2 is provided with a central processing unit (CPU) 101 for controlling overall operation of the electronic blackboard 2, a read-only memory (ROM) 102 storing a program utilized for driving the CPU 101 such as an initial program loader (IPL), a random access memory (RAM) 103 used as a work area of the CPU 101, a solid state drive (SSD) 104 storing various types of data such as a program for the electronic blackboard 2, etc., a network controller 105 for controlling communication via the communication network 9, and an external memory controller 106 for controlling communication with the USB memory 5. That is to say, the electronic blackboard 2 has a configuration as an information processing apparatus.

Further, the electronic blackboard 2 is provided with a capture device 111 for causing a laptop PC 6 to display video information as a still image or a moving image, a graphics processing unit (GPU) 112 for especially processing graphics, and a display controller 113 for controlling and managing display of a screen such that an output image from the GPU 112 is output to a display 3 or a tele-conferencing terminal 7.

Further, the electronic blackboard 2 is provided with a sensor controller 114 for controlling processing of a contact sensor 115, and a contact sensor 115 for detecting a contact of an electronic pen 4, a hand H of a user, etc., on a visual surface of a display 3. The contact sensor 115 inputs and detects coordinates in a method of interrupting infrared rays. In the method for inputting and detecting coordinates, two light-receiving/emitting devices provided on both upper corners of the display 3 emit multiple infrared rays parallel to the display 3. Each infrared ray emitted in a light path is reflected by a reflection member provided on the perimeter of the display 3 and returns in the same light path, so as to be received by a receiving element. The contact sensor 115 outputs, to the sensor controller 114, an identification (ID) indicative of infrared rays emitted by the two light-receiving/emitting devices, which are interrupted by an obstacle, so that the sensor controller 114 specifies a coordinate position of a position contacted by the obstacle. Note that each ID as explained in the following description is an example of identification information.

Further, in addition to the method of interrupting infrared rays, various detection units may be employed for the contact sensor 115, such as a touchscreen using a capacitance method in which a contacted position is specified based on detection of change in capacitance, a touchscreen using a resistance film method in which a contacted position is specified based on change in voltage between two resistance films that face each other, a touchscreen using an electromagnetic induction method in which a contacted position is specified based on detection of electromagnetic induction generated when a display part is contacted by an obstacle, etc.

Further, the electronic blackboard 2 is provided with an electronic pen controller 116. The electronic pen controller 116 communicates with an electronic pen 4, so as to detect whether a display 3 is touched by the pen-tip or the pen-end. Note that the electronic pen controller 116 may be configured to detect whether to be touched by a grip part of an electronic pen 4 or another part of an electronic pen, in addition to the pen-tip or the pen-end of an electronic pen 4.

Further, the electronic blackboard 2 is provided with a bus line 120 such as an address bus or a data bus, which electronically connects the CPU 101, the ROM 102, the RAM 103, the SSD 104, the network controller 105, the external memory controller 106, the capture device 111, the GPU 112, the sensor controller 114, and the electronic pen controller 116, as illustrated in FIG. 2.

Note that programs for an electronic blackboard 2 may be recorded in a computer-readable recording medium such as a CD-ROM, etc., for a purpose of distribution.

### <Functional Configuration of an Electronic Blackboard>

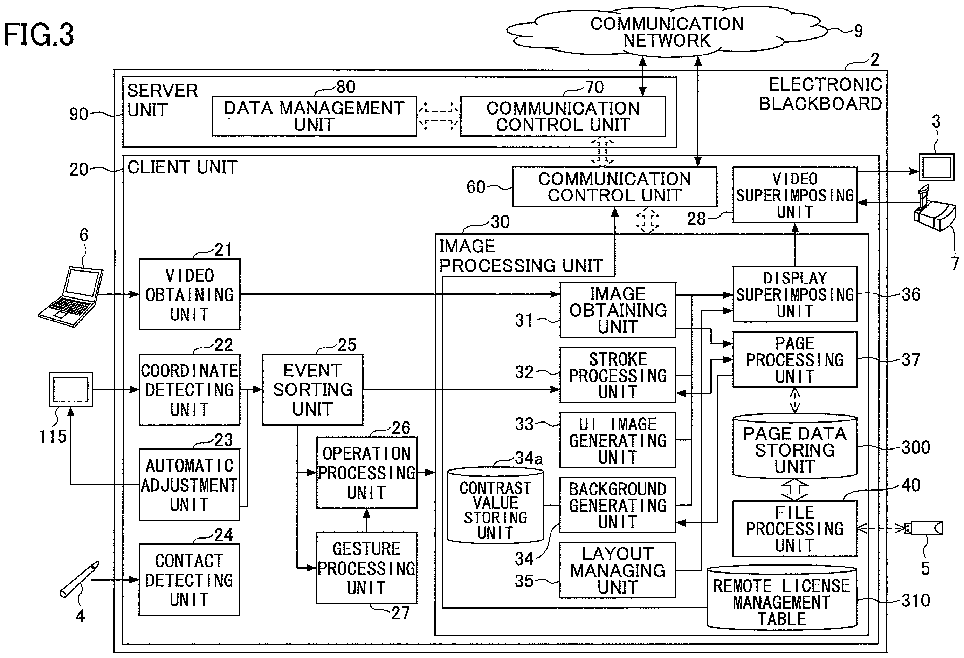

The following description explains a functional configuration of an electronic blackboard, with reference to FIGS. 3 through 16. First, an overall functional configuration of an electronic blackboard 2 is explained, with reference to FIG. 3. FIG. 3 is a functional block diagram of an electronic blackboard 2.

An electronic blackboard 2 includes each functional configuration as illustrated in FIG. 3, based on the hardware configuration as illustrated in FIG. 2 and programs. The electronic blackboard 2 may become a "host device", which firstly initiates remote-sharing processing, and may become a "participant device", which participates in an already-initiated remote-sharing processing at a later time, as well. Further, the electronic blackboard 2 includes a client unit 20 and a server unit 90, as roughly divided units. The client unit 20 and the server unit 90 are functions that are actualized inside the body of a single electronic blackboard 2. Further, in a case where an electronic blackboard 2 becomes a host device, a client unit 20 and a server unit 90 are actualized in the electronic blackboard 2. Further, in a case where an electronic blackboard 2 becomes a participant terminal, a client unit 20 is actualized in the electronic blackboard 2, but a server unit 90 is not actualized in the electronic blackboard 2. That is to say, with reference to FIG. 1, in a case where the electronic blackboard 2a becomes a host device and the electronic blackboard 2b becomes a participant device, a client unit 20 of the electronic blackboard 2a communicates with a client unit 20 of the other electronic blackboard 2b via a server unit 90 that is similarly actualized inside the electronic blackboard 2a. Contrarily, a client unit 20 of the electronic blackboard 2b communicates with a client unit 20 of the other electronic blackboard 2a via a server unit 90 that is actualized inside the said another electronic blackboard 2a.

### (Functional Configuration of a Client Unit 20)

The following description explains a functional configuration of a client unit 20, mainly referring to FIGS. 3 through 5. A client unit 20 includes a video obtaining unit 21, a coordinate detecting unit 22, an automatic adjustment unit 23, a contact detecting unit 24, an event sorting unit 25, an operation processing unit 26, a gesture processing unit 27, a video superimposing unit 28, an image processing unit 30, and a communication control unit 60.

Among the above, the video obtaining unit 21 obtains a video output from a video outputting device such as a laptop PC 6 connected to a cable 10. Upon receiving an image signal from a video outputting device, the video obtaining unit 21 analyzes the image signal to calculate image information such as resolution of an image frame, which is an image formed based on the image signal and displayed on the video outputting device, and update-frequency of the image frame. Further, the image information is output to an image obtaining unit 31.

The coordinate detecting unit 22 detects a coordinate position of the display 3 at which an event (i.e. , a motion of touching the display 3 with a hand H of the user, etc.) is generated by a user. Further, the coordinate detecting unit 22 detects a touched area as well.

The automatic adjustment unit 23 starts running when the electronic blackboard 2 is turned on. The automatic adjustment unit 23 adjusts parameters for processing an image of a sensor camera in a light sensor method, which is performed by the contact sensor 115, so as to enable the contact sensor 115 to output an appropriate value to the coordinate detecting unit 22.

The contact detecting unit 24 detects an event (i.e., a motion of being pressed (touched) with the pen-tip or pen-end of an electronic pen 4 on the display 3, etc.) generated in response to an operation by a user using an electronic pen 4.

The event sorting unit 25 sorts a coordinate position of an event detected by the coordinate detecting unit 22 and a detection result of detection performed by the contact detecting unit 24 to each event, which may be stroke depiction, UI operation, or gesture operation.

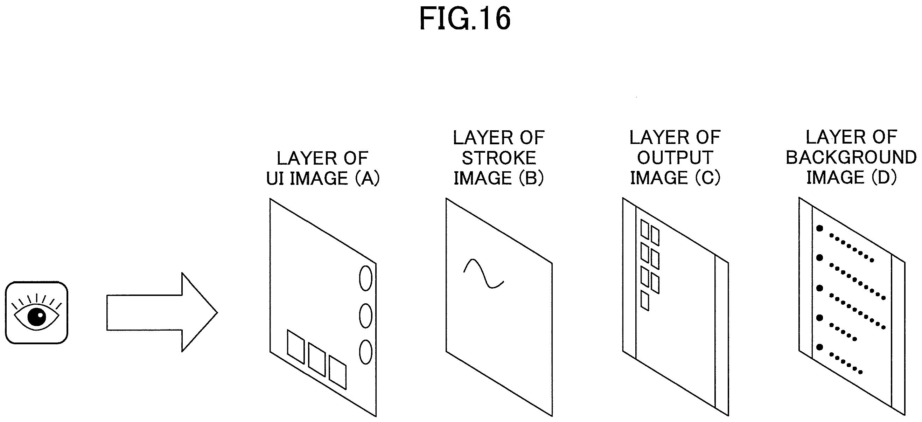

Note that "stroke depiction" is an event generated such that, when a below-explained stroke image (B) as illustrated in FIG. 16 is displayed on a display 3, a user presses the display 3 with an electronic pen 4, moves the electronic pen 4 while keeping the pressing state, and then releases the electronic pen 4 from the display 3 at the end. Based on such stroke depiction, an alphabet letter such as "S" or "T" is depicted on the display 3. Note that "stroke depiction" includes an event of deleting or editing an already-depicted image, in addition to depicting an image.

"UI operation" is an event generated such that, when a below-explained UI image (A) as illustrated in FIG. 16 is displayed on a display 3, a user presses a position, as desired, with an electronic pen 4 or a hand. Based on such UI operation, settings of a color, width, etc., are provided with respect to a line depicted by use of an electronic pen 4.

"Gesture operation" is an event generated such that, when a below-explained stroke image (B) as illustrated in FIG. 16 is displayed on a display 3, a user touches the display 3 with a hand H and moves the hand H. Based on such gesture operation, for example, when a user moves the hand H while touching the display 3 with the hand H, magnifying (or compressing) an image, changing a displayed area, or turning a page, etc., can be performed.

The operation processing unit 26 executes an operation, from among various operations corresponding to UI operations determined by the event sorting unit 25, in accordance with a UI element on which an event is generated. The UI element may be, for example, a button, a list, a check box, or a text box.

The gesture processing unit 27 executes an operation corresponding to a gesture operation determined by the event sorting unit 25.

The video superimposing unit 28 displays an image, which is superimposed by a below-explained display superimposing unit 36, on a video outputting device (i.e., a display 3, etc.) as a video. The video superimposing unit 28 implements picture-in-picture on a video provided from a video outputting device (i.e., a laptop PC 6, etc.) with a video transmitted from another video outputting device (i.e., a tele-conferencing terminal 7, etc.). Further, the video superimposing unit 28 switches display of the picture-in-picture video, which is displayed on a part of the display 3, to display on the full-screen of the display 3.

The image processing unit 30 performs a process for, for example, superimposing each image layer as illustrated in FIG. 16. The image processing unit 30 includes an image obtaining unit 31, a stroke processing unit 32, a UI image generating unit 33, a background generating unit 34, a layout managing unit 35, a display superimposing unit 36, a page processing unit 37, a file processing unit 40, a page data storing unit 300, and a remote license management table 310.

Among the above, the image obtaining unit 31 obtains, as an image, each frame of a video obtained by the video obtaining unit 21. The image obtaining unit 31 outputs data of the image to the page processing unit 37. The image is comparable to an output image (C) provided from a video outputting device (i.e., a laptop PC 6, etc.) as illustrated in FIG. 16.

The stroke processing unit 32 connects contacted positions by a hand H, an electronic pen 4, etc., so as to depict a stroke image, deletes a depicted image, or edits a depicted image, based on an event sorted by the event sorting unit 25 to stroke depiction. The image that resulted from the stroke depiction is comparable to a stroke image (B) as illustrated in FIG. 16. Further, each result from depiction, deletion, and edition of an image, based on the stroke depiction, is stored as below-explained operation data in a below-explained operation data memory unit 840.

The UI image generating unit 33 generates a user interface (UI) image, which is preset with respect to an electronic blackboard 2. The UI image is comparable to an UI image (A) as illustrated in FIG. 16.

The background generating unit 34 receives, from the page processing unit 37, media data out of page data, which is retrieved by the page processing unit 37 from the page data storing unit 300. The background generating unit 34 outputs the received media data to the display superimposing unit 36. Note that an image based on the media data is comparable to a background image (D) as illustrated in FIG. 16. The pattern of the background image (D) may be, for example, a plain or grid display.

The layout managing unit 35 manages layout information, which is indicative of layout with respect to each image output from the image obtaining unit 31, the stroke processing unit 32, or the UI image generating unit 33 (or the background generating unit 34) for the display superimposing unit 36. Thus, the layout managing unit 35 is able to provide the display superimposing unit 36 with an instruction as to where in a UI image (A) and a background image (D) to display an output image (C) and a stroke image (B) or an instruction for not displaying an output image (C) and a stroke image (B).

The display superimposing unit 36 determines a layout of each image output from the image obtaining unit 31, the stroke processing unit 32, or the UI image generating unit 33 (or the background generating unit 34), based on layout information output from the layout managing unit 35.

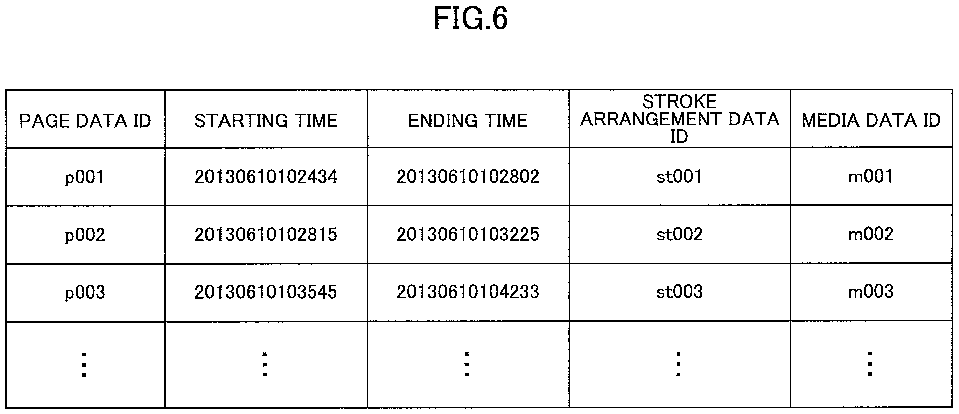

The page processing unit 37 integrates data of a stroke image (B) and data of an output image (C) into a unit of page data and stores the unit of page data in the page data storing unit 300. Data of a stroke image (B) forms a part of page data as stroke arrangement data (i.e., each unit of stroke data), which is represented by a stroke arrangement data ID as illustrated in FIG. 6. Data of an output image (C) forms a part of page data as media data, which is represented by a media data ID as illustrated in FIG. 6. Further, when being retrieved from the page data storing unit 300, the media data is treated as data of a background image (D).

Further, the page processing unit 37 transmits media data, which is included in temporarily stored page data, to the display superimposing unit 36 via the background generating unit 34, such that the video superimposing unit 28 re-renders to display a background image (D) on the display 3. Further, the page processing unit 37 transmits stroke arrangement data (i.e., each unit of stroke data), which is included in page data, back to the stroke processing unit 32, so as to enable re-editing of a stroke. Additionally, the page processing unit 37 is able to delete and duplicate page data as well.

In other words, when the page processing unit 37 stores page data in the page data storing unit 300, data of an output image (C) displayed on the display 3 is temporarily stored in the page data storing unit 300. Then, when being retrieved from the page data storing unit 300, the data is retrieved as media data, which represents a background image (D). Then, out of page data retrieved from the page data storing unit 300, the page processing unit 37 outputs stroke arrangement data that represents a stroke image (B) to the stroke processing unit 32. Further, out of page data retrieved from the page data storing unit 300, the page processing unit 37 outputs media data that represents a background image (D) to the background generating unit 34.

The display superimposing unit 36 superimposes an output image (C) provided from the image obtaining unit 31, a stroke image (B) provided from the stroke processing unit 32, a UI image (A) provided from the UI image generating unit 33, and a background image (D) provided from the background generating unit 34, based on a layout designated by the layout managing unit 35. In the above way, the superimposed image has a configuration with each layer of, in an order viewed from a user, a UI image (A), a stroke image (B), an output image (C), and a background image (D), as illustrated in FIG. 16.

Further, the display superimposing unit 36 may switch the image (C) and the image (D) illustrated in FIG. 16 to exclusively superimpose on the image (A) and the image (B). For example, in a case where the image (A), the image (B), and the image (C) are displayed at first and then a cable 10 between an electronic blackboard 2 and a video outputting device (i.e., a laptop PC, etc.) is pulled out, it is possible to exclude the image (C) as an object for superimposition and display the image (D), if being designated by the layout managing unit 35. In the above case, the display superimposing unit 36 may perform processing for magnifying a displayed screen, compressing a displayed screen, and moving a displayed area as well.

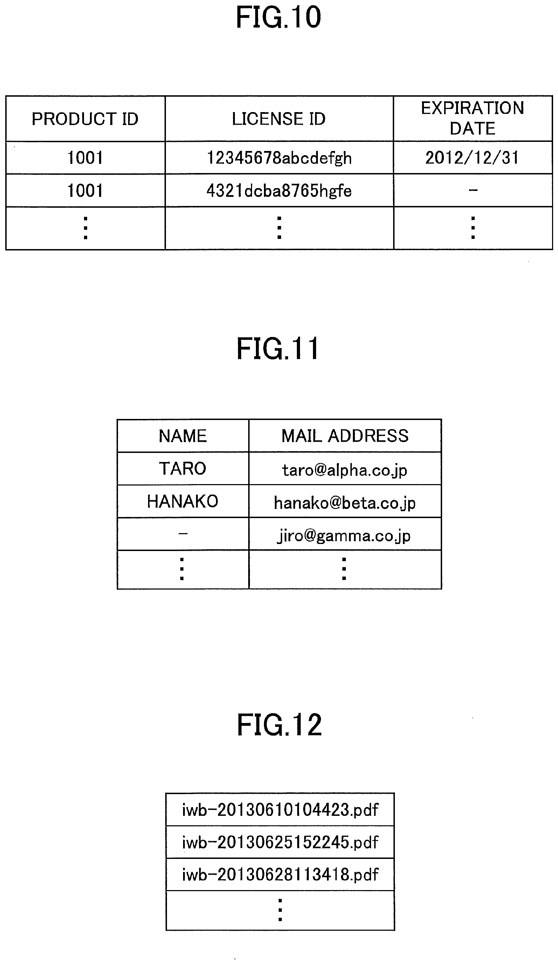

The remote license management table 310 manages license data, which is required for performing remote-sharing processing. In the remote license management table 310, a product ID of an electronic blackboard 2, a license ID used for authentication, and expiration date of a license are managed in association with each other, as illustrated in FIG. 10.

### <<Page Data>>

The page data storing unit 300 stores page data as illustrated in FIG. 6. FIG. 6 is a conceptual diagram illustrating page data. Page data is data (i.e., stroke arrangement data (each unit of stroke data) and media data) corresponding to one page displayed on a display 3. Note that, in the following description, contents of page data are explained separately with reference to FIGS. 6 through 9, to explain various types of parameters included in the page data.

Page data is stored as illustrated in FIG. 6 such that a page data ID for identifying an arbitrary page, a starting time indicative of time when displaying of the page is started, an ending time indicative of time when writing over content of the page by means of strokes, gestures, etc., is finished, a stroke arrangement data ID for identifying stroke arrangement data generated upon a stroke by use of an electronic pen 4 or a hand H of a user, and a media data ID for identifying media data, are associated with each other. Note that page data is managed on a per file basis. Stroke arrangement data is data used for displaying a below-explained stroke image (B), as illustrated in FIG. 16, on the display 3. Media data is data used for displaying a below-explained background image (D), as illustrated in FIG. 16, on the display 3.

Based on such page data, for example, when a user draws an alphabet letter "S" with an electronic pen 4, the alphabet letter "S" is represented by one stroke data ID because the alphabet letter "S" is drawn in one stroke. However, when a user draws an alphabet letter "T" with an electronic pen 4, the alphabet letter "T" is represented by two stroke data IDs because the alphabet letter "T" is drawn in two strokes.

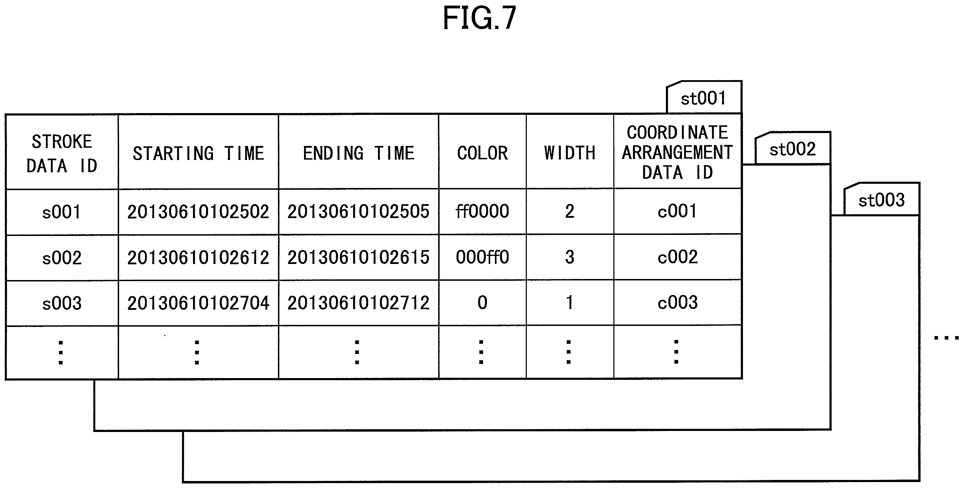

Further, stroke arrangement data represents detail information as illustrated in FIG. 7. FIG. 7 is a conceptual diagram illustrating stroke arrangement data. As illustrated in FIG. 7, one unit of stroke arrangement data may be represented by multiple units of stroke data. Further, one unit of stroke data represents a stroke data ID for identifying the unit of stroke data, a starting time indicative of time when drawing of the stroke is started, an ending time indicative of time when drawing of the stroke is finished, color of the stroke, width of the stroke, and a coordinate arrangement data ID for identifying arrangement of passing points with respect to the stroke.

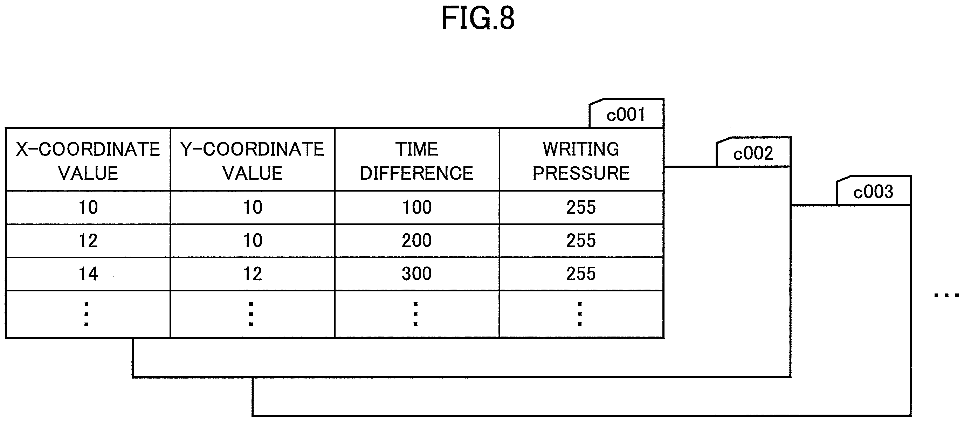

Further, coordinate arrangement data represents detail information as illustrated in FIG. 8. FIG. 8 is a conception diagram illustrating coordinate arrangement data. As illustrated in FIG. 8, coordinate arrangement data represents information indicative of a point (i.e., an X-coordinate value and a Y-coordinate value) on a display 3, time difference (ms) between the time of passing the point and the starting time of the stroke, and writing pressure at the point. In other words, the collection of points illustrated in FIG. 8 is represented by a single coordinate arrangement ID as illustrated in FIG. 7. For example, although an alphabet letter "S" is drawn by a user with an electronic pen 4 in one stroke, multiple passing points are passed to finish drawing "S". Therefore, coordinate arrangement data represents information about the multiple passing points.

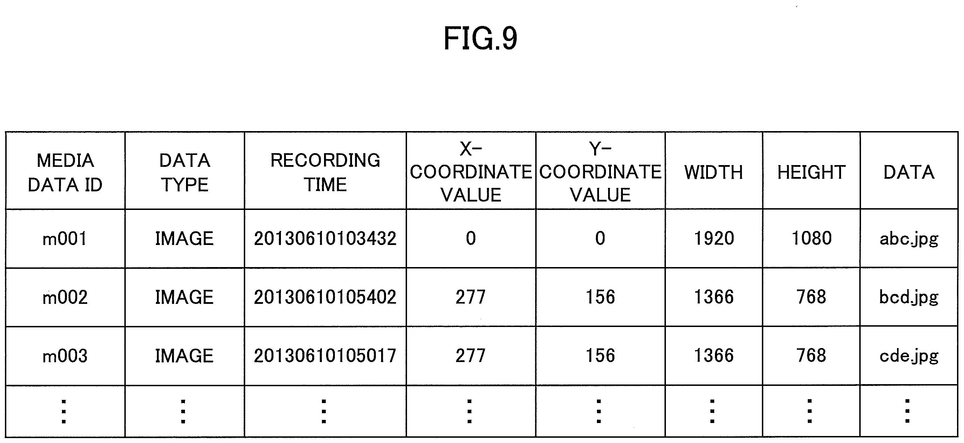

Further, media data, which is included in page data as illustrated in FIG. 6, represents detail information as illustrated in FIG. 9. FIG. 9 is a conceptual diagram illustrating media data. As illustrated in FIG. 9, media data represents a media data ID of page data as illustrated in FIG. 6, a data type of media data, a recording time when page data is recorded by the page processing unit 37 in the page data storing unit 300, a position (i.e., an X-coordinate value and a Y-coordinate value) of an image displayed on a display 3 based on page data, a size (i.e., width and height) of an image, and data indicative of content of media data, which are associated with each other. Among the above, a position of an image displayed on a display 3 based on page data is indicative of a position of the upper left corner of an image displayed based on the page data, on the basis that the coordinates of the upper left corner of the display 3 are: (X-coordinate value, Y-coordinate value) = (0, 0).

### (Functional Configuration of a File Processing Unit 40)

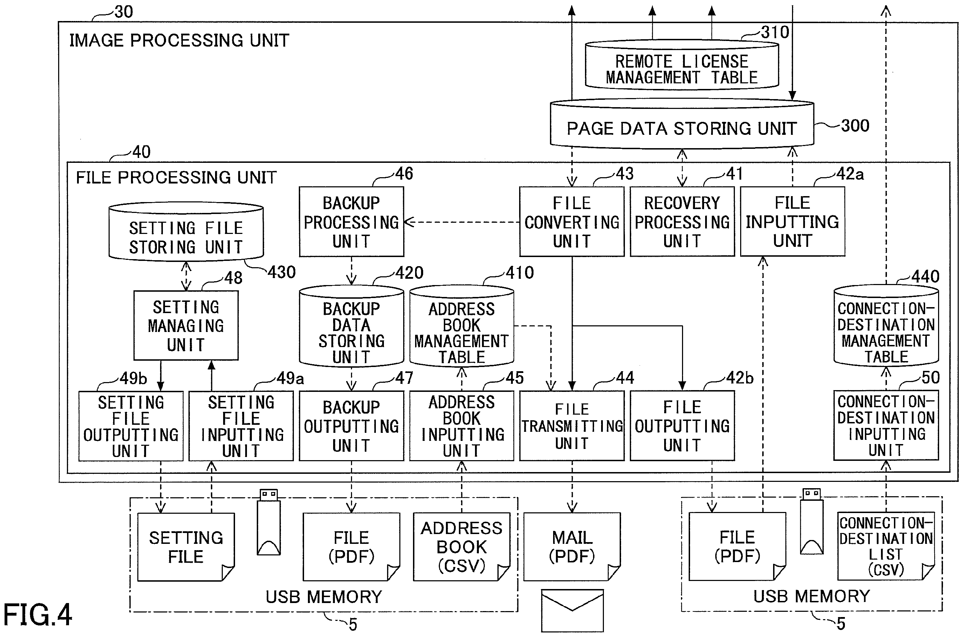

The following description explains a functional configuration of the file processing unit 40 illustrated in FIG. 3, with reference to FIG. 4. Note that FIG. 4 is a functional block diagram of the file processing unit 40. The file processing unit 40 includes a recovery processing unit 41, a file inputting unit 42a, a file outputting unit 42b, a file converting unit 43, a file transmitting unit 44, an address book inputting unit 45, a backup processing unit 46, a backup outputting unit 47, a setting managing unit 48, a setting file inputting unit 49a, and a setting file outputting unit 49b. Further, the file processing unit 40 includes an address book management table 410, a backup data storing unit 420, a setting file storing unit 430, and a connection-destination management table 440.

Upon an abnormal end of an electronic blackboard 2, the recovery processing unit 41 detects the abnormal end and restores unsaved page data. For example, in a case of a normal end, page data is recorded as a PDF file in a USB memory 5 via the file processing unit 40. However, in a case of an abnormal end such as when the power is down, page data remains being recorded in the page data storing unit 300. Therefore, when the power is back on, the recovery processing unit 41 retrieves the page data from the page data storing unit 300 for restoration.

The file inputting unit 42a retrieves a PDF file from a USB memory 5 and stores each page of the PDF file in the page data storing unit 300 as page data.

The file converting unit 43 converts page data stored in the page data storing unit 300 into a file in a PDF format.

The file outputting unit 42b records a PDF file, which is output by the file converting unit 43, in a USB memory 5.

The file transmitting unit 44 attaches a PDF file, which is generated by the file converting unit 43, to an email to transmit the PDF file. To determine a transmission destination of the file, the display superimposing unit 36 displays contents of the address book management table 410 on a display 3, such that the file transmitting unit 44 accepts an operation from a user via an input device such as a touchscreen to select a destination. As illustrated in FIG. 11, on the address book management table 410, names and email addresses of destinations are managed in association with each other. Further, the file transmitting unit 44 may accept an operation provided by a user via an input device such as a touchscreen to enter an email address as a destination.

The address book inputting unit 45 retrieves a file of a list of email addresses from a USB memory 5 and manages the file on the address book management table 410.

The backup processing unit 46 stores a file output by the file outputting unit 42b and a file transmitted by the file transmitting unit 44 in the backup data storing unit 420 for the purpose of backup. Note that, in a case where a backup setting is not provided by a user, the process for backup is not performed. Backup data is stored in a PDF format, as illustrated in FIG. 12.

The backup outputting unit 47 stores a backed-up file in a USB memory 5. At the time of storing a backed-up file, a password is entered for a purpose of security, through an operation provided by a user via an input device such as a touchscreen.

The setting managing unit 48 stores and retrieves various types of setting information regarding an electronic blackboard 2 in and out of the setting file storing unit 430 for a purpose of management. The various types of setting information may include, for example, a network setting, a date/time setting, an area/language setting, a mail server setting, an address book setting, a connection-destination list setting, a setting regarding backup, etc. Note that the network setting may include, for example, a setting regarding an IP address of an electronic blackboard 2, a setting regarding a netmask, a setting regarding a default gateway, a setting regarding a domain name system (DNS), etc.

The setting file outputting unit 49b records various types of setting information regarding an electronic blackboard 2 in a USB memory 5 as a setting file. Note that a user cannot see contents of setting files because of security.

The setting file inputting unit 49a retrieves a setting file stored in a USB memory 5 and updates settings of an electronic blackboard 2 with various types of setting information.

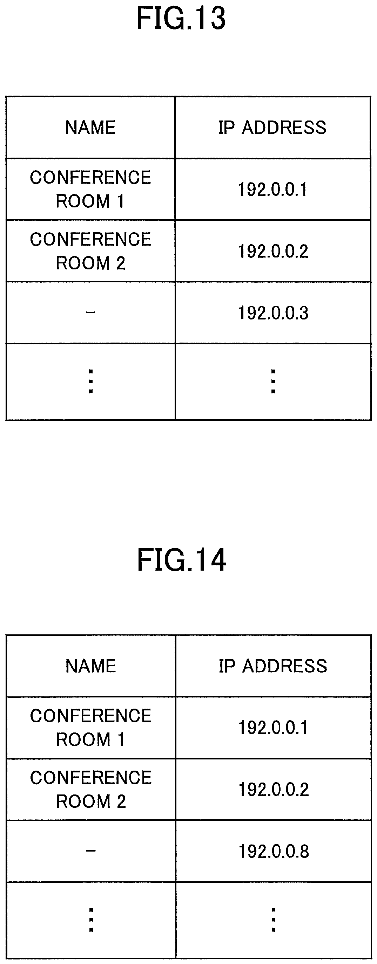

A connection-destination inputting unit 50 retrieves a file of a list of IP addresses, which are connection destinations of remote-sharing processing, from a USB memory 5 and manages the file on the connection-destination management table 440. Note that, as illustrated in FIG. 13, the connection-destination management table 440 is for preliminarily managing IP addresses of electronic blackboards 2 that operate as host devices, so as to reduce a burden for a user of an electronic blackboard 2 to enter an IP address of an electronic blackboard 2 that operates as a host device in a case where the electronic blackboard 2 is a participant device that is going to participate in remote-sharing processing. On the connection-destination management table 440, names of locations, at which electronic blackboards 2 that operate as host devices enabling participation are installed, and IP addresses of the electronic blackboards 2 that operate as host devices are managed in association with each other.

Note that the connection-destination management table 440 is not required to exist. However, in the case of not existing, a user of a participant device is required to enter, via an input device such as a touchscreen, an IP address of a host device at the time of starting remote-sharing processing with the host device. For the above reason, a user of a participant device should be informed of an IP address of a host device from a user of a host device via a telephone call, an email, etc.

### (Functional Configuration of the Communication Control Unit 60)

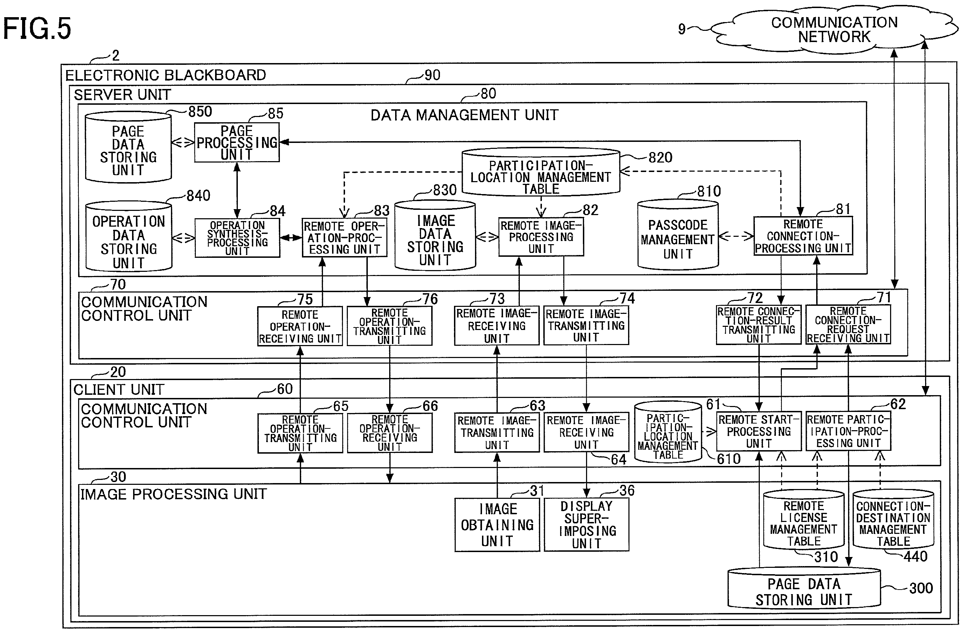

The following description explains a functional configuration of the communication control unit 60, with reference to FIG. 5. The communication control unit 60 controls, via the communication network 9, communication performed with another electronic blackboard 2 and communication performed with a below-explained communication control unit 70 of a server unit 90. Thus, the communication control unit 60 includes a remote start-processing unit 61, a remote participation-processing unit 62, a remote image-transmitting unit 63, a remote image-receiving unit 64, a remote operation-transmitting unit 65, a remote operation-receiving unit 66, and a participation-location management table 610.

Among the above, the remote start-processing unit 61 of an electronic blackboard 2 requests a server unit 90 of the same electronic blackboard 2 for newly starting remote-sharing processing and receives a request-result from the server unit 90. Here, the remote start-processing unit 61 refers to the remote license management table 310 and, in a case where license information (i.e., a product ID, a license ID, an expiration date) is managed, the remote start-processing unit 61 may provide a request for starting remote-sharing processing. Note that, in a case where license information is not managed, the request for starting remote-sharing processing cannot be provided.

The participation-location management table 610 is for managing, with respect to an electronic blackboard 2 that operates as a host device, electronic blackboards 2 that operate as participant devices currently participating in remote-sharing processing. As illustrated in FIG. 14, on the participation-location management table 610, names of locations, at which participating electronic blackboards 2 are installed, and IP addresses of the electronic blackboards 2 are managed in association with each other.

The remote participation-processing unit 62 provides, via the communication network 9, a request for participating in remote-sharing processing to the remote connection-request receiving unit 71 included in a server unit 90 of an electronic blackboard 2 that operates as a host device and has already started remote-sharing processing. In the above case, the remote participation-processing unit 62 refers to the remote license management table 310 as well. Further, in a case of participating in already-started remote-sharing processing, the remote participation-processing unit 62 refers to the connection-destination management table 440 to obtain the IP address of an electronic blackboard 2, which is a destination of participation. Note that the remote participation-processing unit 62 is not required to refer to the connection-destination management table 440. That is to say, an IP address of an electronic blackboard 2, which is a destination of participation, may be entered by a user through an operation via an input device such as a touchscreen.

The remote image-transmitting unit 63 transmits an output image (C), which has been transmitted from the video obtaining unit 21 via the image obtaining unit 31, to the server unit 90.

The remote image-receiving unit 64 receives image data, which is provided from a video outputting device connected to another electronic blackboard 2, from the server unit 90 and outputs the image data to the display superimposing unit 36, so as to enable remote-sharing processing.

The remote operation-transmitting unit 65 transmits, to the server unit 90, various types of operation data required for remote-sharing processing. The various types of operation data may include, for example, data as to adding a stroke, deleting a stroke, editing (i.e., magnifying, compressing, moving) a stroke, storing page data, creating page data, duplicating page data, deleting page data, turning a displayed page, etc. Further, the remote operation-receiving unit 66 receives operation data, which has been input in another electronic blackboard 2, from the server unit 90 and outputs the operation data to the image processing unit 30, so as to enable remote-sharing processing.

### (Functional Configuration of a Server Unit)

The following description explains a functional configuration of a server unit 90, with reference to FIG. 5. A server unit 90, which is provided in each electronic blackboard 2, is able to perform a role as a server unit 90 for any electronic blackboard 2. Thus, a server unit 90 includes a communication control unit 70 and a data management unit 80.

### (Functional Configuration of a Communication Control Unit 70)

The following description explains a functional configuration of a communication control unit 70, with reference to FIG. 5.

The communication control unit 70 of an electronic blackboard 2 controls, via the communication control unit 60 included in the client unit 20 of the same electronic blackboard 2 and via the communication network 9, communication performed with the communication control unit 60 included in a client unit 20 of another electronic blackboard 2. The data management unit 80 manages operation data, image data, etc.

More specifically, the communication control unit 70 includes a remote connection-request receiving unit 71, a remote connection-result transmitting unit 72, a remote image-receiving unit 73, a remote image-transmitting unit 74, a remote operation-receiving unit 75, and a remote operation-transmitting unit 76.

Among the above, the remote connection-request receiving unit 71 receives, from the remote start-processing unit 61, a request for starting remote-sharing processing and receives, from the remote participation-processing unit 62 provided in another electronic blackboard 2, a request for participating in remote-sharing processing, via the communication network 9. The remote connection-result transmitting unit 72 transmits, to the remote start-processing unit 61, a result of a request for starting remote-sharing processing and transmits, to the remote participation-processing unit 62 provided in another electronic blackboard 2, a result of a request for participating in remote-sharing processing, via the communication network 9.

The remote image-receiving unit 73 receives image data (i.e., data representing an output image (C)) from the remote image-transmitting unit 63 and transmits the image data to a below-explained remote image-processing unit 82. The remote image-transmitting unit 74 receives image data from the remote image-processing unit 82 and transmits the image data to the remote image-receiving unit 64.

The remote operation-receiving unit 75 receives operation data (i.e., data representing a stroke image (B), etc.) from the remote operation-transmitting unit 65 and transmits the operation data to a below-explained remote operation-processing unit 83. The remote operation-transmitting unit 76 receives operation data from the remote operation-processing unit 83 and transmits the operation data to the remote operation-receiving unit 66.

### (Functional Configuration of Data Management Unit)

The following description explains a functional configuration of a data management unit 80, with reference to FIG. 5.

The data management unit 80 includes a remote connection-processing unit 81, a remote image-processing unit 82, a remote operation-processing unit 83, an operation synthesis-processing unit 84, and a page processing unit 85. Further, the server unit 90 includes a passcode management unit 810, a participation-location management table 820, an image data storing unit 830, an operation data storing unit 840, and a page data storing unit 850.

Among the above, the remote connection-processing unit 81 starts and ends remote-sharing processing. Further, the remote connection-processing unit 81 checks whether a license exists and whether a license is not expired, based on license information that is received by the remote connection-request receiving unit 71 from the remote start-processing unit 61 together with a request for starting remote-sharing processing or based on license information that is received by the remote connection-request receiving unit 71 from the remote participation-processing unit 62 together with a request for participating in remote-sharing processing. Further, the remote connection-processing unit 81 checks whether the number of requests for participation provided from a client unit 20 of another electronic blackboard 2 does not exceed a predetermined maximum number for participation.

Further, the remote connection-processing unit 81 determines whether a passcode transmitted from another electronic blackboard 2 together with a request for participating in remote-sharing processing is the same as a passcode stored in the passcode management unit 810. Then, in a case where the passcodes are the same, participation in the remote-sharing processing is permitted. Note that the passcode is issued by the remote connection-processing unit 81 at a time of newly starting remote-sharing processing and a user of an electronic blackboard 2 that operates as a participant device to participate in the remote-sharing processing is informed of the passcode by a user of an electronic blackboard 2 that operates as a host device, via a telephone call, an email, etc. Thus, a user of a participant device that is going to participate in remote-sharing processing is allowed to participate, upon entering a passcode in the participant device via an input device such as a touchscreen and providing a request for participation. Note that, in a case of prioritizing usability for a user over security, checking of a passcode may be omitted as long as a license status is checked.

Further, in a case where an electronic blackboard 2 is a host device, the remote connection-processing unit 81 stores, in the participation-location management table 820 of the server unit 90, participation-location information included in a request for participation, which has been transmitted from the remote participation-processing unit 62 of a participant device via the communication network 9. Further, the remote connection-processing unit 81 retrieves remote location information stored in the participation-location management table 820 and transmits the remote location information to the remote connection-result transmitting unit 72. The remote connection-result transmitting unit 72 of a host device transmits remote location information to the remote start-processing unit 61 of the client unit 20 provided in the same host device. The remote start-processing unit 61 stores remote location information in the participation-location management table 610. Thus, a host device manages remote location information both in the client unit 20 and the server unit 90.

The remote image-processing unit 82 receives image data (i.e., an output image (C)) from a video outputting device (i.e., a laptop PC, etc.) connected to a client unit (including the client unit provided in the same electronic blackboard 2 operating as a host device) of each electronic blackboard 2 under remote-sharing processing, and stores the image data in the image data storing unit 830. Further, the remote image-processing unit 82 determines an order for displaying image data for remote-sharing processing, based on a chronological order in which the server unit 90 of the electronic blackboard 2 operating as the host device receives image data. Further, the remote image-processing unit 82 refers to the participation-location management table 820 and transmits image data in the above determined order via the communication control unit 70 (i.e., the remote image-transmitting unit 74) to client units 20 (including the client unit provided in the same electronic blackboard 2 operating as the host device) of all electronic blackboards 2 participating in the remote-sharing processing.

The remote operation-processing unit 83 receives various types of operation data (i.e., a stroke image (B), etc.) regarding a stroke image, etc., which is depicted by a client unit (including the client unit provided in the same electronic blackboard 2 operating as the host device) of each electronic blackboard 2 under remote-sharing processing, and determines an order for displaying images for remote-sharing processing, based on a chronological order in which the server unit 90 provided in the electronic blackboard 2 operating as the host device receives images. Note that various types of operation data are the same as the various types of operation data as explained above. Further, the remote operation-processing unit 83 refers to the participation-location management table 820 and transmits operation data to client units 20 (including the client unit provided in the same electronic blackboard 2 operating as the host device) of all electronic blackboards 2 under remote-sharing processing.

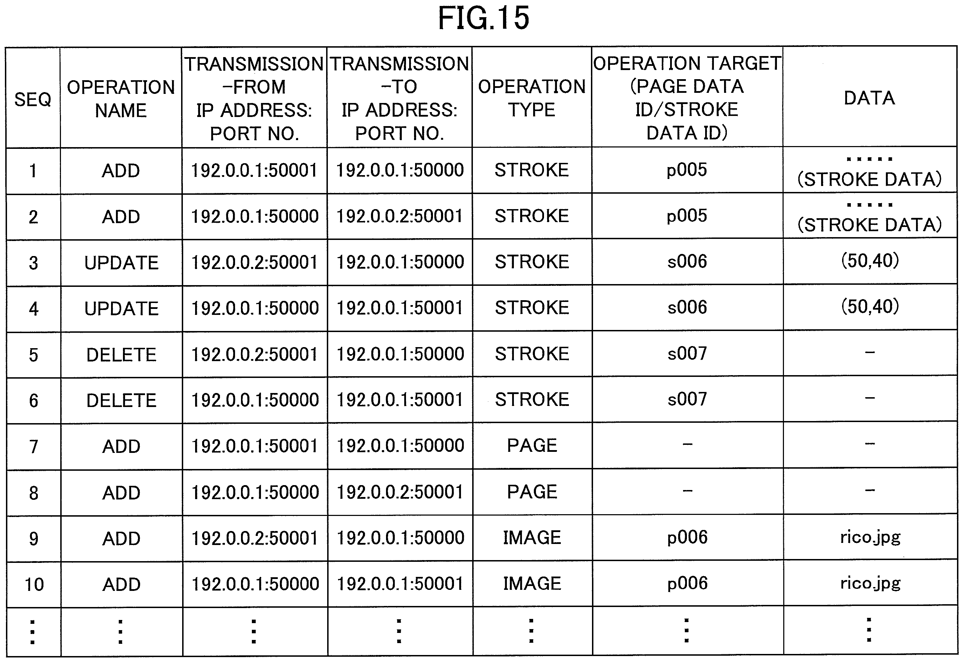

The operation synthesis-processing unit 84 synthesizes operation data with respect to each electronic blackboard 2, which has been output by the remote operation-processing unit 83. Further, the operation synthesis-processing unit 84 stores the operation data that resulted from the synthesis in the operation data storing unit 840 and returns the operation data that resulted from the synthesis to the remote operation-processing unit 83. The operation data is transmitted from the remote operation-transmitting unit 76 to the client unit provided in the electronic blackboard operating as the host device and to each client unit provided in an electronic blackboard operating as a participant device, so that an image represented by the same operation data is displayed on each electronic blackboard 2. Thus, as illustrated in FIG. 15, operation data includes a sequence (SEQ), an operation name of operation data, an IP address and a port number of a client unit (or a server unit) of an electronic blackboard 2 from which operation is transmitted, an IP address and a port number of a client unit (or a server unit) of an electronic blackboard 2 to which operation is transmitted, an operation type of operation data, an operation target of operation data, and data representing content of operation data, in association with each other. For example, it is indicated that, with respect to SEQ1, a stroke is depicted at a client unit (port number: 50001) provided in an electronic blackboard (IP address: 192.0.0.1) operating as a host device and operation data is transmitted to a server unit (port number: 50000) provided in the same electronic blackboard (IP address: 192.0.0.1) operating as the host device. In the above case, the operation type is "STROKE", the operation target is page data ID "p005", and the data representing content of operation data is data representing a stroke. Further, it is indicated that, with respect to SEQ2, operation data is transmitted from a server unit (port number: 50000) provided in an electronic blackboard (IP address: 192.0.0.1) operating as a host device to a client unit (port number: 50001) provided in another electronic blackboard (IP address: 192.0.0.2) operating as a participant device.

Note that the operation synthesis-processing unit 84 performs synthesis in an order as operation data is input to the operation synthesis-processing unit 84. Therefore, unless the communication network 9 is busy, a stroke image (B) is displayed on displays 3 of all electronic blackboards 2 under remote-sharing processing sequentially as a user of each electronic blackboard 2 draws a stroke.

The page processing unit 85 has the same function as the page processing unit 37 included in the image processing unit 30 of the client unit 20. Therefore, the server unit 90 stores page data as illustrated in FIGS. 6 through 8 in the page data storing unit 850. Note that explanation of the page data storing unit 850 is omitted because the explanation is the same as the page data storing unit 300 provided in the image processing unit 30.

### <Processing and Operation in an Embodiment>

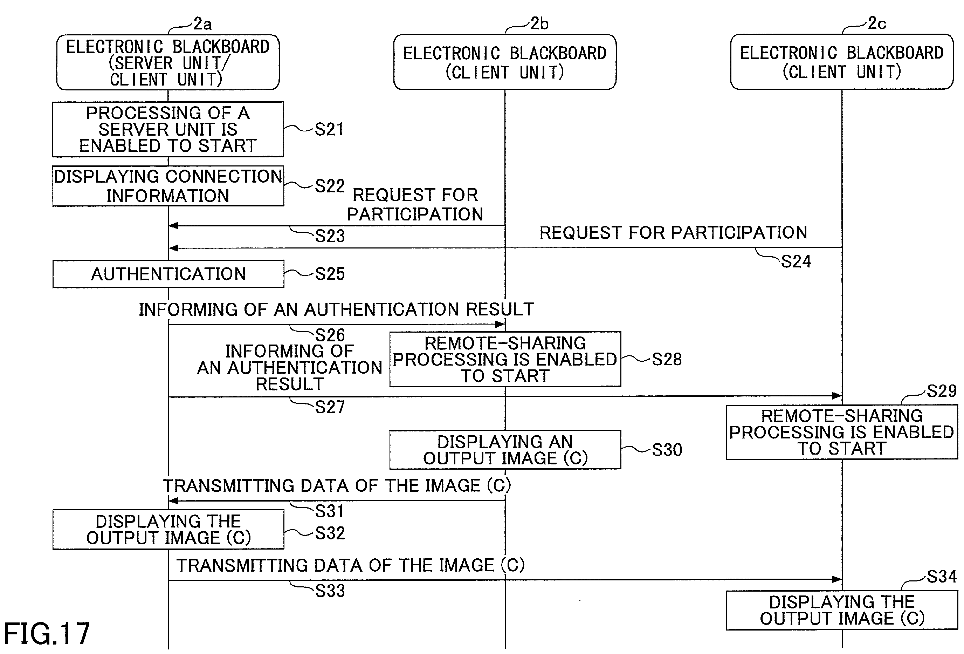

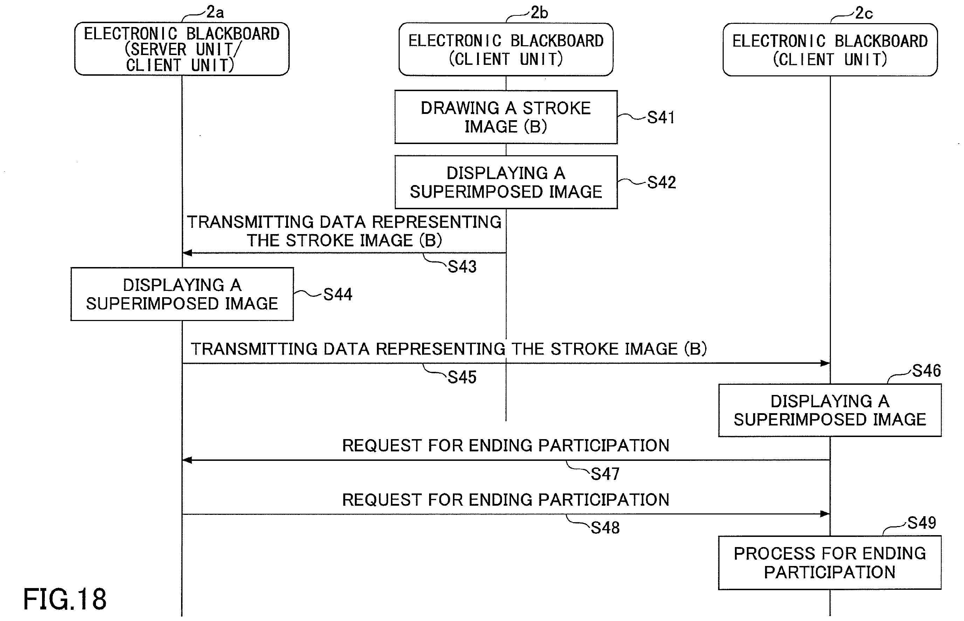

The following description explains processing and operation in the embodiment, with reference to FIGS. 17 and 18. Note that FIGS. 17 and 18 are sequence diagrams illustrating processing performed by each electronic blackboard.

Description of the embodiment illustrated in FIGS. 17 and 18 explains a case, in which an electronic blackboard 2a operates as a host device (i.e., a server unit and a client unit) that hosts remote-sharing processing, and electronic blackboards 2b and 2c operate as participant devices (i.e., client units) that participate in remote-sharing processing. Further, here, displays 3a, 3b, and 3c as well as laptop PCs 6a, 6b, and 6c are connected to the electronic blackboards 2a, 2b, and 2c, respectively. Further, electronic pens 4a, 4b, and 4c are used for the electronic blackboards 2a, 2b, and 2c, respectively.

### (Process for participation)

First, the following description explains a process for the electronic blackboards 2b and 2c to participate in remote-sharing processing, with reference to FIG. 17.

When a user turns on the power of the electronic blackboard 2a, the client unit 20 of the electronic blackboard 2a runs. Then, when a user provides an operation via an input device such as a touchscreen to cause the server unit 90 to run, the remote start-processing unit 61 of the client unit 20 outputs, to the remote connection-request receiving unit 71 provided in the server unit 90 of the same electronic blackboard 2a, an instruction for causing processing of the server unit 90 to start. In the above way, with respect to the electronic blackboard 2a, not only the client unit 20 but also the server unit 90 are enabled to start various types of processing (Step S21).

Next, the UI image generating unit 33 provided in the client unit 20 of the electronic blackboard 2a generates connection information for establishing connection with the electronic blackboard 2a, and the video superimposing unit 28 displays, on the display 3a, the connection information obtained from the UI image generating unit 33 via the display superimposing unit 36 (Step S22).

The connection information includes an IP address of a host device and a passcode generated for remote-sharing processing to be performed at the current time. In the above case, the passcode, which is stored in the passcode management unit 810, is retrieved by the remote connection-processing unit 81 as illustrated in FIG. 5 and is sequentially transmitted to the remote connection-result transmitting unit 72 and then to the remote start-processing unit 61. Further, the passcode is transmitted from the communication control unit 60, which includes the remote start-processing unit 61, to the image processing unit 30 as illustrated in FIG. 3, and is ultimately input to the UI image generating unit 33. In the above way, the passcode is included in the connection information. Then, users of the electronic blackboards 2b and 2c are informed of the connection information by a user of the electronic blackboard 2a via a telephone call, an email, etc. Note that, when provided with the connection-destination management table 440, a participant device may request for participation even though an IP address of a host device is not included in connection information.

Next, when the electronic blackboards 2b and 2c accept an input of the connection information through an operation by each user via an input device such as a touchscreen, the remote participation-processing unit 62 provided in the client unit 20 of each of the electronic blackboard 2a and 2b transmits the passcode to the communication control unit 70 provided in the server unit 90 of the electronic blackboard 2a via the communication network 9, based on the IP address included in the connection information, so as to request participation (Steps S23 and S24). In the above way, the remote connection-request receiving unit 71 of the communication control unit 70 receives the request for participation (including the passcode) from each of the electronic blackboards 2b and 2c, and outputs the passcode to the remote connection-processing unit 81.

Next, the remote connection-processing unit 81 performs authentication with respect to the passcode received from each of the electronic blackboards 2b and 2c by use of a passcode managed in the passcode management unit 810 (Step S25). Then, the remote connection-result transmitting unit 72 informs an authentication result to the client unit 20 of each of the electronic blackboards 2b and 2c (Steps S26 and S27). Through the authentication at Step S25, in a case where each of the electronic blackboards 2b and 2c is determined to be a valid electronic blackboard, communication for remote-sharing processing is established between the electronic blackboard 2a, which operates as a host device, and each of the electronic blackboards 2b and 2c, which operate as participant devices, such that the remote participation-processing unit 62 provided in the client unit 20 of each of the electronic blackboard 2b and 2c can start remote-sharing processing with each of the other electronic blackboards 2 (Steps S28 and S29).

### (Display of an Output Image)

The following description explains a process for displaying an output image (C) during remote-sharing processing, with reference to FIG. 17.

First, the electronic blackboard 2b displays an output image (C) on the display 3b (Step S30). Specifically, the image obtaining unit 31 of the electronic blackboard 2b receives data representing an output image (C), which is displayed on the laptop PC 6b, from the laptop PC 6b via the video obtaining unit 21 and transmits the data to the display 3b via the display superimposing unit 36 and the video superimposing unit 28, such that the display 3b displays the output image (C).

Next, the image processing unit 30, which includes the image obtaining unit 31 and is provided in the electronic blackboard 2b, transmits the data representing the output image (C) to the remote image-transmitting unit 63, such that the communication control unit 60, which includes the remote image-transmitting unit 63, transmits the data representing the output image (C) to the communication control unit 70 of the electronic blackboard 2a, which operates as a host device, via the communication network 9 (Step S31). Through the above way, the remote image-receiving unit 73 of the electronic blackboard 2a receives the data representing the output image (C) and outputs the data to the remote image-processing unit 82, such that the remote image-processing unit 82 stores the data representing the output image (C) in the image data storing unit 830.

Next, the electronic blackboard 2a, which operates as the host device, displays the output image (C) on the display 3a (Step S32). Specifically, the remote image-processing unit 82 of the electronic blackboard 2a outputs the data representing the output image (C), which has been received from the remote image-receiving unit 73, to the remote image-transmitting unit 74. The remote image-transmitting unit 74 outputs the data representing the image data (C) to the remote image-receiving unit 64 provided in the client unit 20 of the same electronic blackboard 2a operating as the host device. The remote image-receiving unit 64 outputs the data representing the output image (C) to the display superimposing unit 36. The display superimposing unit 36 outputs the data representing the output image (C) to the video superimposing unit 28. The video superimposing unit 28 outputs the data representing the output image (C) to the display 3a. In the above way, the display 3a displays the output image (C) on the display 3a.

Next, the communication control unit 70, which includes the remote image-transmitting unit 74 and is provided in the server unit 90 of the electronic blackboard 2a operating as the host device, transmits the data representing the output image (C) via the communication network 9 to the communication control unit 60 of the electronic blackboard 2c, being an electronic blackboard other than the electronic blackboard 2b from which the data representing the output image (C) is transmitted (Step S33). In the above way, the remote image-receiving unit 64 of the electronic blackboard 2c operating as a participant device receives the data representing the output image (C) .

Next the electronic blackboard 2c displays the output image (C) on the display 3c (Step S34). Specifically, the remote image-receiving unit 64 of the electronic blackboard 2c outputs the data representing the output image (C), which has been received at Step S33 as described above, to the display superimposing unit 36 of the electronic blackboard 2c. The display superimposing unit 36 outputs the data representing the output image (C) to the video superimposing unit 28. The video superimposing unit 28 outputs the data representing the output image (C) to the display 3c. In the above way, the display 3c displays the output image (C).

Note that, in a case where data representing a UI image (A) and data representing a stroke image (B) are input to the video superimposing unit 28 in addition to data representing an output image (C), the display superimposing unit 36 generates a superimposed image (A, B, C), and the video superimposing unit 28 outputs data representing the superimposed image (A, B, C) to the display 3c. Further, in a case where data representing a video (E) for a teleconference has been transmitted from a tele-conferencing terminal 7 to the video superimposing unit 28, the video superimposing unit 28 implements picture-in-picture such that the data representing the video (E) for a teleconference is superimposed on the superimposed image (A, B, C), so as to provide an output to the display 3c.

### (Display of a Superimposed Image)

The following description explains a process for displaying a superimposed image during remote-sharing processing, with reference to FIG. 18.

First, a user of the electronic blackboard 2b draws a stroke image (B) on the electronic blackboard 2b, using the electronic pen 4b (Step S41).

Next, the display superimposing unit 36 of the electronic blackboard 2b superimposes the stroke image (B) on a UI image (A) and an output image (C), as illustrated in FIG. 16, such that the video superimposing unit 28 displays a superimposed image (A, B, C) on the display 3b of the electronic blackboard 2b (Step S42). Specifically, the stroke processing unit 32 of the electronic blackboard 2b receives data representing the stroke image (B) as operation data from the coordinate detecting unit 22 and the contact detecting unit 24 via the event sorting unit 25, and transmits the data to the display superimposing unit 36. In the above way, the display superimposing unit 36 can superimpose the stroke image (B) on the UI image (A) and the output image (C), such that the video superimposing unit 28 displays the superimposed image (A, B, C) on the display 3b of the electronic blackboard 2b.

Next, the image processing unit 30, which includes the stroke processing unit 32 and is provided in the electronic blackboard 2b, transmits the data representing the stroke image (B) to the remote operation-transmitting unit 65, such that the remote operation-transmitting unit 65 of the electronic blackboard 2b transmits the data representing the stroke data (B) to the communication control unit 70 of the electronic blackboard 2a, which operates as a host device, via the communication network 9 (Step S43). In the above way, the remote operation-receiving unit 75 of the electronic blackboard 2a receives the data representing the stroke image (B) and outputs the data to the remote operation-processing unit 83, such that the remote operation-processing unit 83 outputs the data representing the stroke image (B) to the operation synthesis-processing unit 84. In the above way, data representing a stroke image (B) drawn on the electronic blackboard 2b is transmitted one by one, upon being drawn, to the remote operation-processing unit 83 of the electronic blackboard 2a, which operates as a host device. The data representing a stroke image (B) is data that is specified by each stroke data ID as illustrated in FIG. 7. Therefore, for example, as described above, in a case where a user draws an alphabet letter "T" using an electronic pen 4, data representing a stroke image (B) that is specified by each of the two stroke data IDs is transmitted in a sequential order, because the alphabet letter "T" is drawn in two strokes.

Next, the electronic blackboard 2a operating as the host device displays the superimposed image (A, B, C), which includes data representing a stroke image (B) transmitted from the electronic blackboard 2b, on the display 3a (Step S44). Specifically, the operation synthesis-processing unit 84 of the electronic blackboard 2a synthesizes data representing multiple stroke images (B), which have been transmitted via the remote operation-processing unit 83 in a sequential order, for storing in the operation data storing unit 840 and for transmitting back to the remote operation-processing unit 83. In the above way, the remote operation-processing unit 83 outputs data representing a synthesized stroke image (B), which has been received from the operation synthesis-processing unit 84, to the remote operation-transmitting unit 76. The remote operation-transmitting unit 76 outputs the data representing a synthesized stroke image (B) to the remote operation-receiving unit 66 provided in the client unit 20 of the same electronic blackboard 2a operating as the host device. The remote operation-receiving unit 66 outputs the data representing a synthesized stroke image (B) to the display superimposing unit 36 provided in the image processing unit 30. Thus, the display superimposing unit 36 superimposes the synthesized stroke image (B) on the UI image (A) and the output image (C). Lastly, the video superimposing unit 28 displays a superimposed image (A, B, C), which is superimposed by the display superimposing unit 36, on the display 3a.

Next, the communication control unit 70, which includes the remote operation-transmitting unit 76 and is provided in the server unit 90 of the electronic blackboard 2a operating as a host device, transmits the data representing the synthesized stroke image (B) via the communication network 9 to the communication control unit 60 of the electronic blackboard 2c, being an electronic blackboard other than the electronic blackboard 2b from which the data representing stroke images (B) is transmitted (Step S45). In the above way, the remote operation-receiving unit 66 of the electronic blackboard 2c, which operates as a participant device, receives the data representing the synthesized stroke image (B).

Next, the electronic blackboard 2c displays the superimposed image (A, B, C) on the display 3c (Step S34). Specifically, the remote operation-receiving unit 66 of the electronic blackboard 2c outputs the data representing the synthesized stroke image (B), which has been received at Step S45 as described above, to the image processing unit 30 of the electronic blackboard 2c. The display superimposing unit 36 of the image processing unit 30 superimposes the data representing the synthesized stroke image (B) on each of the UI image (A) and the output image (C), and outputs data representing the superimposed image (A, B, C) to the video superimposing unit 28. The video superimposing unit 28 outputs the data representing the superimposed image (A, B, C) to the display 3c. In the above way, the display 3c displays the superimposed image (A, B, C) on the display 3c.

Note that, although an output image (C) is displayed on a display 3 in the above process, a background image (D) may be displayed, instead of the output image (C). Further, instead of an exclusive relation between an output image (C) and a background image (D), both of the output image (C) and the background image (D) may be concurrently displayed on a display 3.

### (End of Participation)

The following description explains a process in which a participant device ends participation in remote-sharing processing, with reference to FIG. 18. In the embodiment illustrated in FIG. 18, a process in which the electronic blackboard 2c ends participation is described.

First, when the electronic blackboard 2c accepts an operation from a user via an input device such as a touchscreen for providing a request for ending participation, the remote participation-processing unit 62 provides a request for ending participation to the communication control unit 70 provided in the server unit 90 of the electronic blackboard 2a, which operates as a host device (Step S47). In the above way, the remote connection-request receiving unit 71 of the communication control unit 70 receives the request for ending participation from the electronic blackboard 2c, and outputs, to the remote connection-processing unit 81, the request for ending participation together with the IP address of the electronic blackboard 2c. Then, based on the IP address transmitted from the remote connection-request receiving unit 71, the remote connection-processing unit 81 of the electronic blackboard 2a deletes, from the participation-location management table 820, the IP address of the electronic blackboard 2c, from which the request for ending participation is transmitted, and the name of the location at which the electronic blackboard 2c is installed. Further, the remote connection-processing unit 81 outputs, to the remote connection-result transmitting unit 72, a notification indicative of the IP address of the electronic blackboard 2c and indicative of deletion.

Next, the communication control unit 70, which includes the remote connection-result transmitting unit 72, instructs the communication control unit 60 provided in the client unit 20 of the electronic blackboard 2c for ending participation, via the communication network 9 (Step S48). In the above way, the remote participation-processing unit 62 of the communication control unit 60 provided in the electronic blackboard 2c performs a process for ending participation by disconnecting from communication for remote-sharing processing, such that participation is ended (Step S49).

### <First Embodiment>

Description of the present embodiment explains an electronic blackboard 2 that enables a user to effectively utilize the size of a display 3 and enables to improve user operability, by means of modification of a handwritten object.

A handwritten object is generated by the stroke processing unit 32 and is stored in the page data storing unit 300 via the page processing unit 37, as described above. The description of the present embodiment explains an example, in which the stroke processing unit 32 modifies a handwritten object. A handwritten object may be: a stroke, which is made by connecting coordinates; a text, which is obtained as characters, values, etc., through an optical character reader (OCR) process performed on a stroke; a system-generated character such as date and time; a predetermined figure such as a triangle, a star or a circle; a line such as an arrow, a segment or a Bézier curve, etc. Such information displayed on a display 3 based on a drawing operation from a user is referred to as a handwritten object. Additionally, a handwritten object may include an image that is captured by an electronic blackboard 2 based on an output image (C) transmitted from a laptop PC 6, etc.

### <Process by a Stroke Processing Unit>

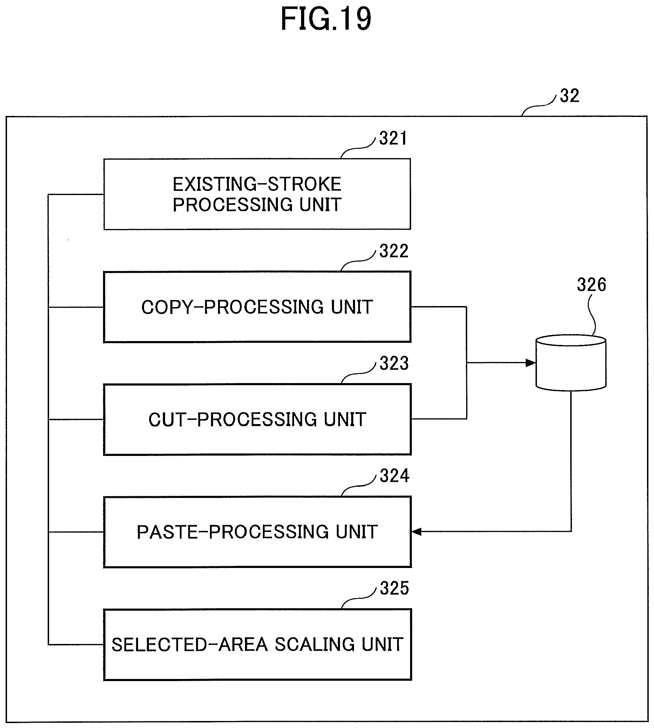

FIG. 19 is an example of a functional block diagram of a stroke processing unit 32. Note that the other functions included in a client unit 20 are illustrated in FIG. 2.

The stroke processing unit 32 includes an existing-stroke processing unit 321, a copy-processing unit 322, a cut-processing unit 323, a paste-processing unit 324, and a selected-area scaling unit 325. Among the above, the existing-stroke processing unit 321 provides a function for "connecting contacted positions of a hand H or an electronic pen 4, based on an event that is sorted by the event sorting unit 25 to stroke depiction, so as to depict a stroke image, delete a depicted image, and edit a depicted image", as described above.

Further, the stroke processing unit 32 includes a paste-buffer 326. The paste-buffer 326, which is constituted with at least one of a RAM 103, an SSD 104, a USB memory 5, etc., stores a handwritten object that is stored by a user at a latest time.

The copy-processing unit 322 stores (or copies), in the paste-buffer 326, all handwritten objects or handwritten objects in an area selected by a user.

After storing all handwritten objects or handwritten objects in an area selected by a user in the paste-buffer 326, the cut-processing unit 323 deletes the handwritten objects from a display 3.

The paste-processing unit 324 pastes the handwritten objects stored in the paste-buffer 326 onto a page. The position to paste the handwritten objects is designated by a user using an electronic pen 4 or a hand H.

The selected-area scaling unit 325 scales (i.e., magnifies or compresses) all handwritten objects or handwritten objects in an area selected by a user, in accordance with a magnification ratio designated by a user.

The above functions may be implemented by use of an existing library or a development tool. For example, functions for copying, cutting and pasting may be achieved by use of, for example, a program called InkCanvas, which is provided by Microsoft Corporation (registered trademark).

### «Context Menu»

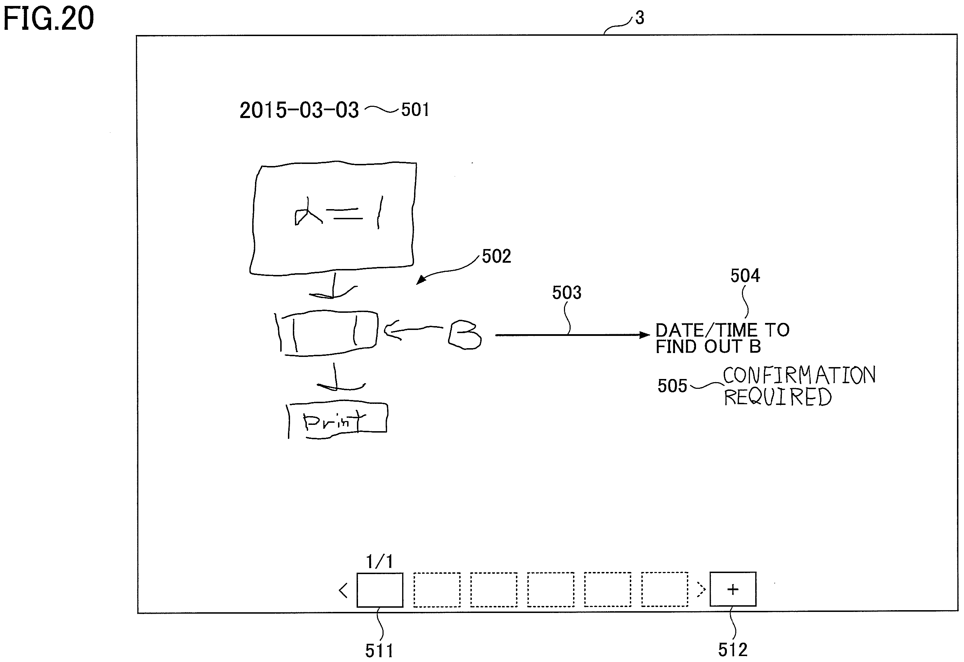

The following description explains a context menu on which a user selects a function as illustrated in FIG. 19, with reference to FIGS. 20 through FIG. 24. A context menu is generated by the UI image generating unit 33 as a type of UI image (A). A context menu provides a command (i.e., an operation item) for operation that can be selected by a user, based on whether an electronic pen 4 is inside a below-explained frame or outside the below-explained frame and based on a condition of the paste-buffer 326. Accordingly, a user can avoid a situation where an operation cannot be entered even though a command is selected.

FIG. 20 is a drawing illustrating an example of handwritten objects displayed on a display 3. In FIG. 20, handwritten objects including a date 501, a flowchart 502, an arrow 503, an OCR discriminant character 504, and a red character 505 are displayed. The date 501 is comparable to a system-generated character, the flowchart 502 is comparable to a stroke, the arrow 503 is comparable to a line, the OCR discriminant character 504 is comparable to a text, and the red character 505 is comparable to a stroke drawn in red (although not being distinguishable as red in the drawing).

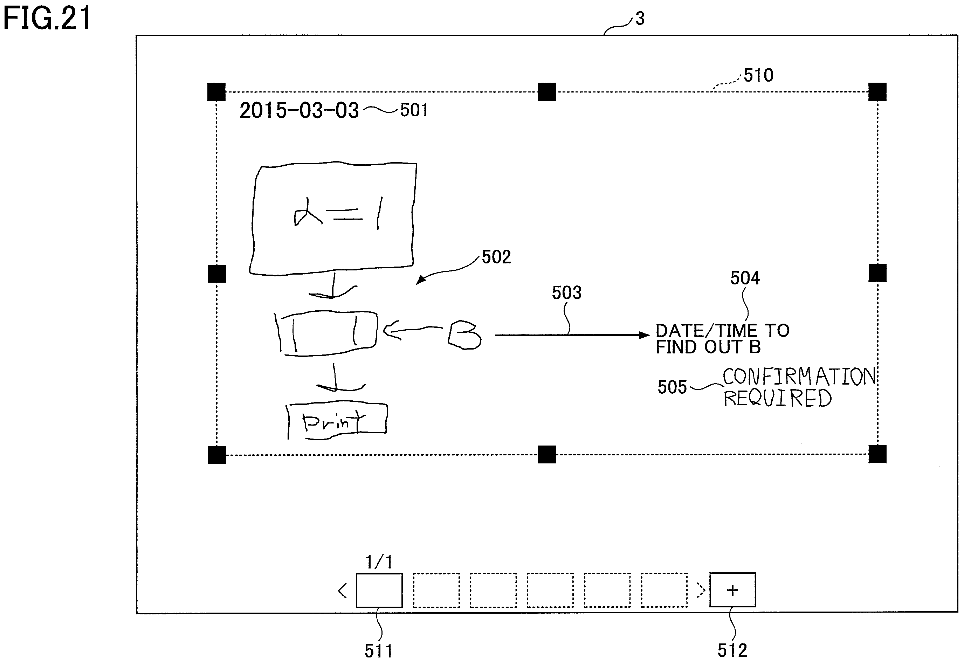

FIG. 21 is a drawing illustrating an example of handwritten objects in a state of being selected by a user. To select a handwritten object, for example, a user draws with an electronic pen 4 or a hand H such that the trajectory encloses the handwritten object. Alternatively, a handwritten object may be configured to become selected when a part of the handwritten object is touched with an electronic pen 4 of a hand H.

The UI image generating unit 33 depicts a frame 510 in a rectangular shape enclosing selected handwritten objects. A user can see the frame 510 to know whether a handwritten object that the user wants to copy is selected or not.

### <<Being Inside a Frame, and the Paste-buffer 326 Is Empty>>

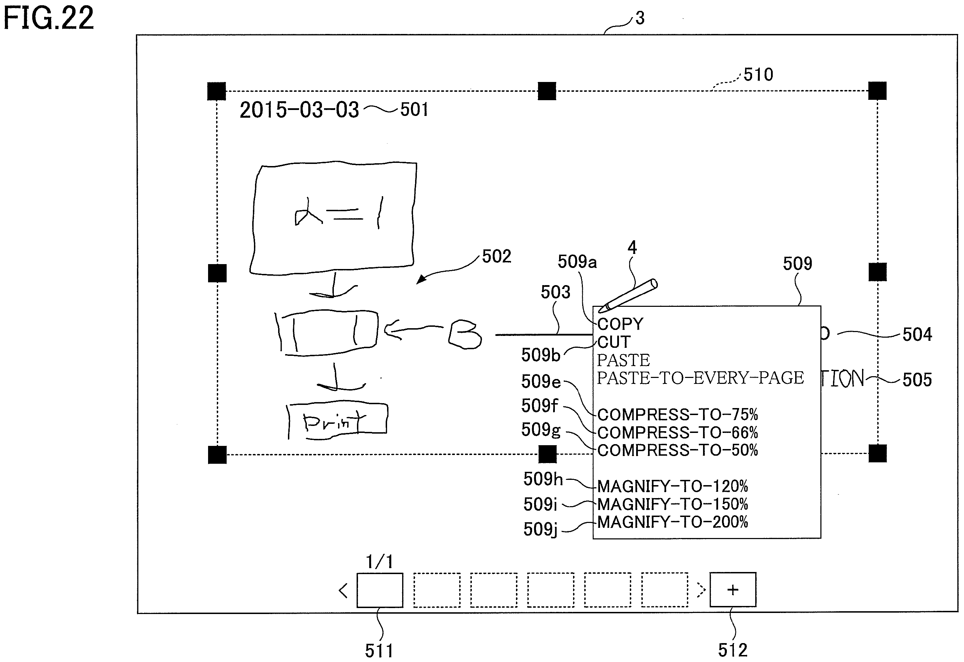

Next, the following description explains a case where a user long-presses an electronic pen 4 inside the frame 510 to display a context menu. Note that the following description explains a case where the paste-buffer 326 is empty. In the above way, the UI image generating unit 33 displays a context menu 509 as illustrated in FIG. 22. In FIG. 22, an example of a displayed context menu 509 is illustrated.

As nothing is stored in the paste-buffer 326 and a user has displayed the context menu 509 inside the frame 510, the context menu 509 includes commands of a copy 509a, a cut 509b, a compress-to-75% 509e, a compress-to-66% 509f, a compress-to-50% 509g, a magnify-to-120% 509h, a magnify-to-150% 509i, and a magnify-to-200% 509j. The following description explains each command.

When the copy 509a command (i.e., a copy operation) is selected by a user, the copy-processing unit 322 copies the handwritten objects inside the frame 510 onto the paste-buffer 326. The copy 509a command is not selectable in a case where a user long-presses an electronic pen 4 outside the frame 510.

When the cut 509b command (i.e., a cut operation) is selected by a user, the cut-processing unit 323 copies the handwritten objects in the frame 510 onto the paste-buffer 326. Further, the cut-processing unit 323 deletes the handwritten objects inside the frame 510. The cut 509b command is not selectable in a case where a user long-presses an electronic pen 4 outside the frame 510.

When the compress-to-75% 509e command (i.e., a compression operation included in a scaling operation) is selected by a user, the selected-area scaling unit 325 compresses the handwritten objects inside the frame 510 to 75% of the original size, with the base point being set at the upper left corner, while maintaining the aspect ratio. The handwritten objects remain being selected.

The compress-to-75% 509e command is not selectable in a case where a user long-presses an electronic pen 4 outside the frame 510. Note that, alternatively, it may be possible to be select the command, in a case where a user long-presses an electronic pen 4 outside the frame 510. For example, in a case where the compress-to-75% 509e command is selected when a handwritten object is not selected, all handwritten objects displayed on a display 3 automatically become objects to be compressed. A user may provide such a setting to an electronic blackboard 2. Note that the base point in the above case may be at the upper left corner of the display 3, etc.

When the compress-to-66% 509f command or the compress-to-50% 509g command is selected by a user, compression to 66% or to 50% is performed, correspondingly.

When the magnify-to-120% 509h command (i.e., a magnification operation included in a scaling operation) is selected by a user, the selected-area scaling unit 325 magnifies the handwritten objects inside the frame 510 to 120% of the original size, with the base point being set at the upper left corner of the frame 510, while maintaining the aspect ratio. The handwritten objects remain being selected. The magnify-to-120% 509h command is not selectable in a case where a user long-presses an electronic pen 4 outside the frame 510. However, similarly to the case of compression, it may alternatively be possible to select the command.

Note that, in a case where the bottom right corner of a selected area becomes outside the screen of the display 3 at a time of magnification, the upper left corner moves towards a base point such that the bottom right corner is not outside the screen. In a case where the bottom right corner becomes outside the screen of the display 3 even after moving towards a base point to a possible extent, handwritten objects are magnified at a magnification ratio that is the largest possible without becoming outside the screen. Determination whether outside the screen may be performed by determining whether coordinates (i.e., X, Y) of the bottom right corner of the frame 510 after being magnified are inside the screen of the display 3. The largest magnification ratio is calculated, based on a ratio of the largest coordinates (i.e., Xmax, Ymax) of the display 3 to coordinates (i.e., X, Y) of the bottom right corner of the frame 510 before being magnified (for example, Xmax/X, Ymax/Y).

Additionally, magnification may not be performed in the case where the bottom right corner becomes outside the screen of the display 3 even after moving towards a base point to the possible extent. In the above case, the UI image generating unit 33 notifies a user that magnification is not possible, such as by displaying a message.

When the magnify-to-150% 509i command or the magnify-to-200% 509j command is selected by a user, the handwritten objects are magnified to 150% or to 200% of the original size, correspondingly.

### <<Being Inside a Frame, and the Paste-buffer 326 Is Not Empty>>

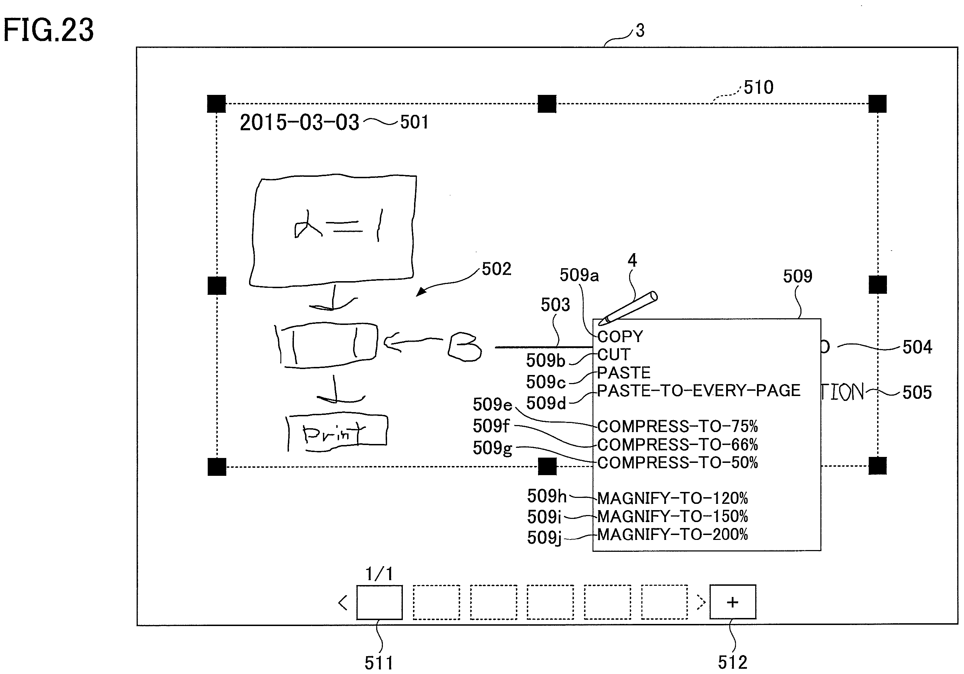

In a case where an electronic pen 4 is long-pressed inside the frame 510 and the paste-buffer 326 is not empty, a context menu 509 as illustrated in FIG. 23 is displayed. In FIG. 23, an example of a context menu 509 that is displayed in a case where the paste-buffer 326 is not empty and an electronic pen 4 is long-pressed inside the frame 510 is explained.

As the paste-buffer 326 is not empty, a paste 509c command and a paste-to-every-page 509d command are displayed, in addition to the commands illustrated in FIG. 22.

When the paste 509c command (i.e., a paste operation) is selected by a user, the paste-processing unit 324 pastes a handwritten object stored in the paste-buffer 326 onto a position as indicated by a user with an electronic pen 4. The pasted handwritten object is in a selected state. Therefore, there may be a case where different handwritten objects are depicted while being superimposed. Note that the pasting may be performed after deleting the handwritten objects inside the frame 510.

Note that, in a case where the size of a handwritten object stored in the paste-buffer 326 is larger than the size of the selected area, the handwritten object may stick out of the selected area or may be compressed so as to fit inside the selected area. In a case of sticking out of the selected area, there may be a case where a handwritten object outside the frame 510 is overlapped.

When the paste-to-every-page 509d command is selected by a user, the paste-processing unit 324 pastes a handwritten object stored in the paste-buffer 326 onto every page. The pasting manner is the same as the paste 509c command. An electronic blackboard 2 manages pages on a per file basis, and "every page" means every page included in one file. Handwritten objects included in a screen are stored as one page. Pages may be added by a user by pressing an add-button 512, as needed, and, when the paste-to-every-page 509d command is selected, the handwritten objects are pasted onto every page included in the file.

### <<Being Outside a Frame, and the Paste-buffer 326 Is Not Empty>>

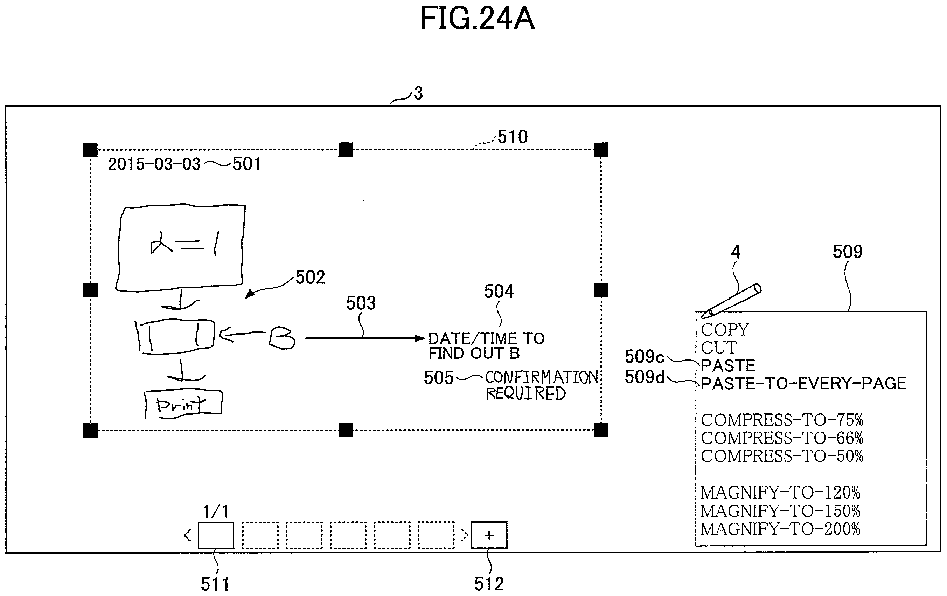

The following is a case where a user long-pressed an electronic pen 4 outside the frame 510 for displaying a context menu 509. Through the above way, a context menu 509 as illustrated in FIG. 24A is displayed. In FIG. 24A, an example of a context menu 509 displayed in a case where an electronic pen 4 is long-pressed outside the frame 510 is illustrated. Although the paste-buffer 326 is not empty, because a user has displayed the context menu 509 outside the frame 510, the context menu 509 includes commands of the paste 509c and the paste-to-every-page 509d.

When either of the commands is selected outside the frame 510, the paste-processing unit 324 pastes a handwritten object stored in the paste-buffer 326 onto a position of an electronic pen 4. A handwritten object that sticks out of the display 3 may not be depicted or may be depicted after being compressed. Additionally, the pasting may not be performed, while an electronic blackboard 2 displays a message indicative of sticking out.

### <<Without a Frame, and the Paste-buffer 326 Is Not Empty>>

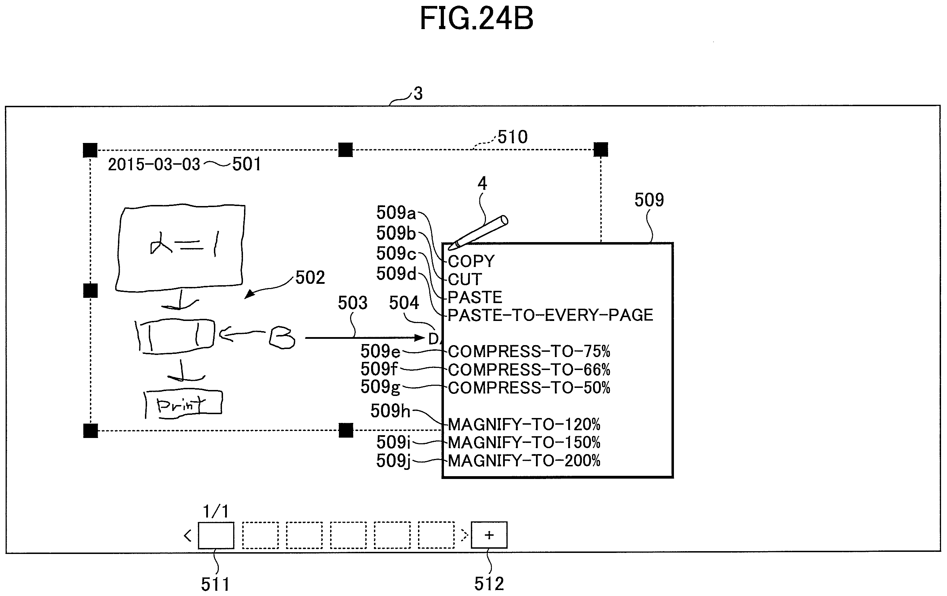

The following is a case where a user long-pressed an electronic pen 4 without selecting any handwritten objects. Through the above way, a context menu as illustrated in FIG. 24B is displayed. That is to say, the paste 509c, the paste-to-every-page 509d, and commands for magnification and compression are displayed. When the paste 509c command or the paste-to-every-page 509d command is selected, a handwritten object stored in the paste-buffer 326 is pasted onto a position of an electronic pen 4. When a command for magnification or compression is selected, a rectangular area enclosing all handwritten objects on the display 3 is magnified or compressed.

Note that, in a case where the paste-buffer 326 is empty, only the commands for magnification and compression are displayed in a selectable manner.

### <<To Copy and To Paste>>

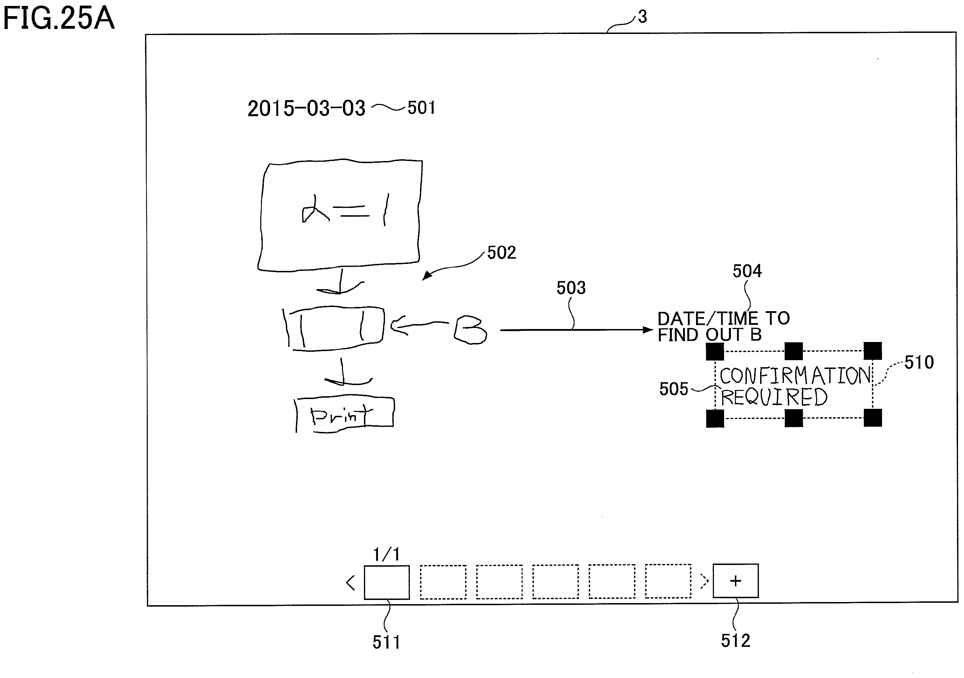

The following description explains a handwritten object displayed on the display 3 when each command is selected, with reference to FIGS. 25A through 30B.

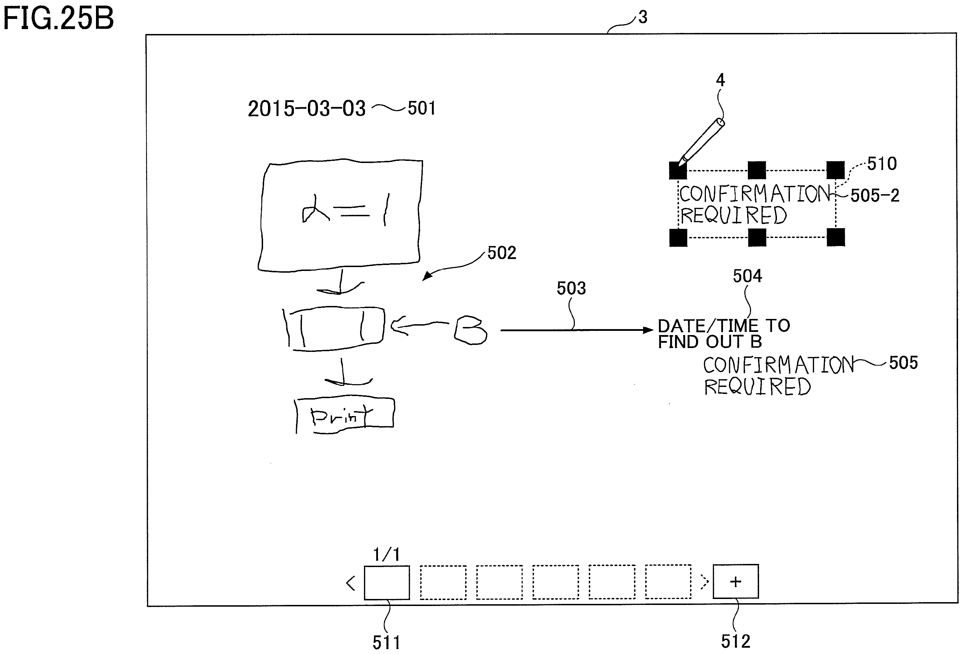

FIGS. 25A and 25B are examples of a drawing for explaining operations for copying and pasting. In FIG. 25A, an example of a copied handwritten object is illustrated. In FIG. 25A, the red character 505 is in a selected state, as a user has displayed a context menu 509 inside the frame 510 and has copied the red character 505 onto the paste-buffer 326 through the copy 509a command.

Next, the following is a case where a user displayed the context menu 509 at a copy-destination, which is outside the frame 510, and selected the paste 509c command. Through the above way, the red character 505-2, which was copied in the paste-buffer 326, is pasted as illustrated in FIG. 25B. The position to be pasted on is a position at which the user long-pressed an electronic pen 4 for displaying the context menu 509. Further, the pasted handwritten object is in a state of being selected by the frame 510.

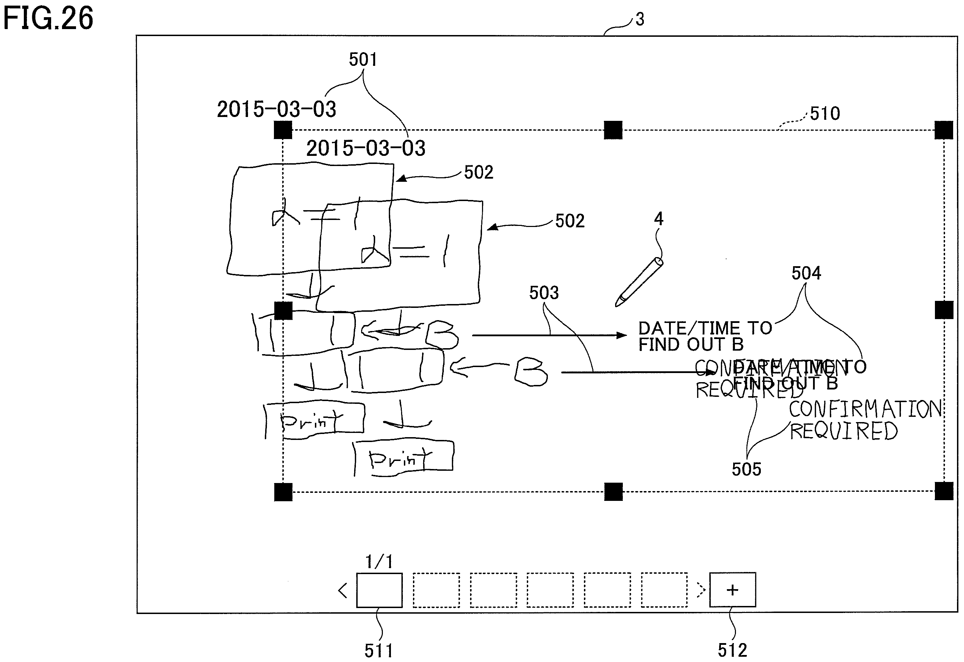

FIG. 26 is a drawing illustrating an example of handwritten objects pasted in a superimposed manner. The following is a case where the handwritten objects inside the frame 510 illustrated in FIG. 21 are stored in the paste-buffer 326. Further, a user displayed the context menu 509 inside the frame 510 or outside the frame 510 and selected the paste 509c command. As the handwritten objects inside the frame 510 are pasted, pairs of the same handwritten objects are displayed as illustrated in the drawing.

### <<To Cut>>

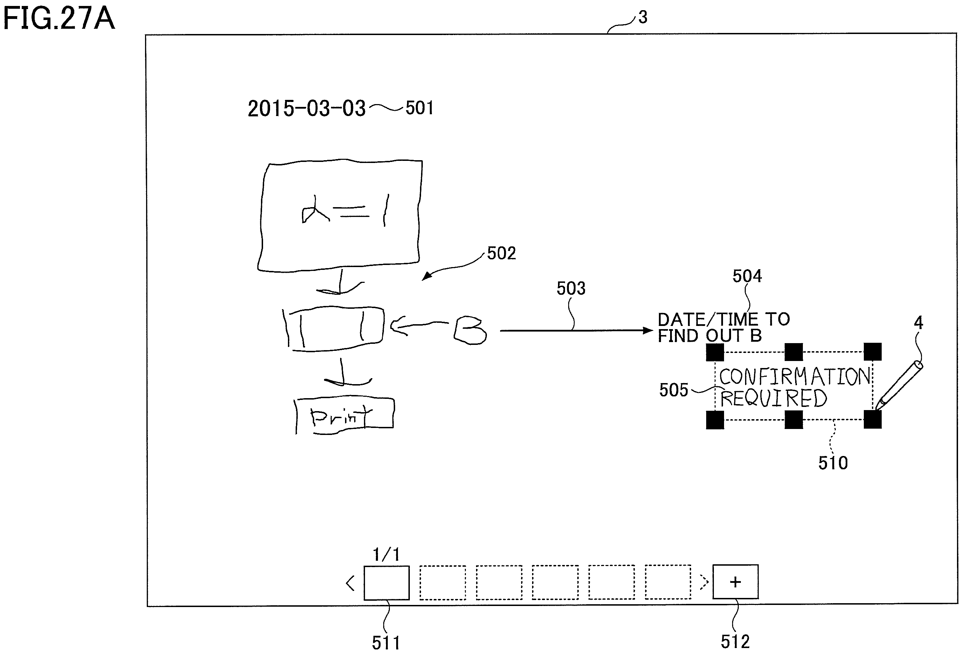

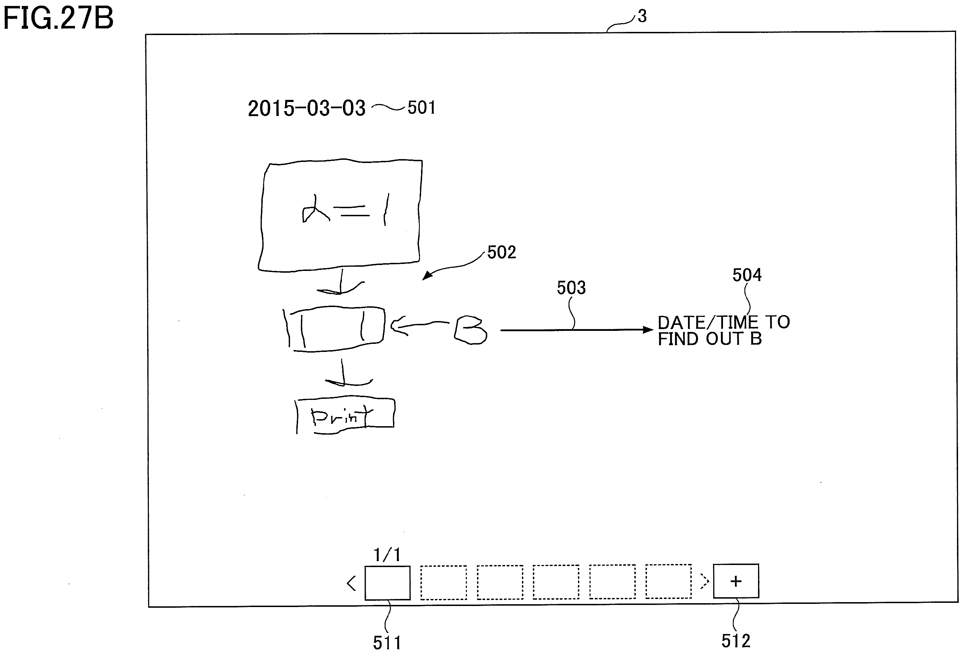

FIGS. 27A and 27B are examples of a drawing for explaining an operation for cutting. In FIG. 27A, the red character 505 is in a selected state. The following is a case where a user displayed a context menu 509 inside the frame 510 and selected the cut 509b command. Thus, as illustrated in FIG. 27B, the red character 505 is deleted.

### <<To Paste to Every Page>>

For convenience of explanation, the following description explains a case where there is no handwriting information on each page before the paste-to-every-page 509d is selected.

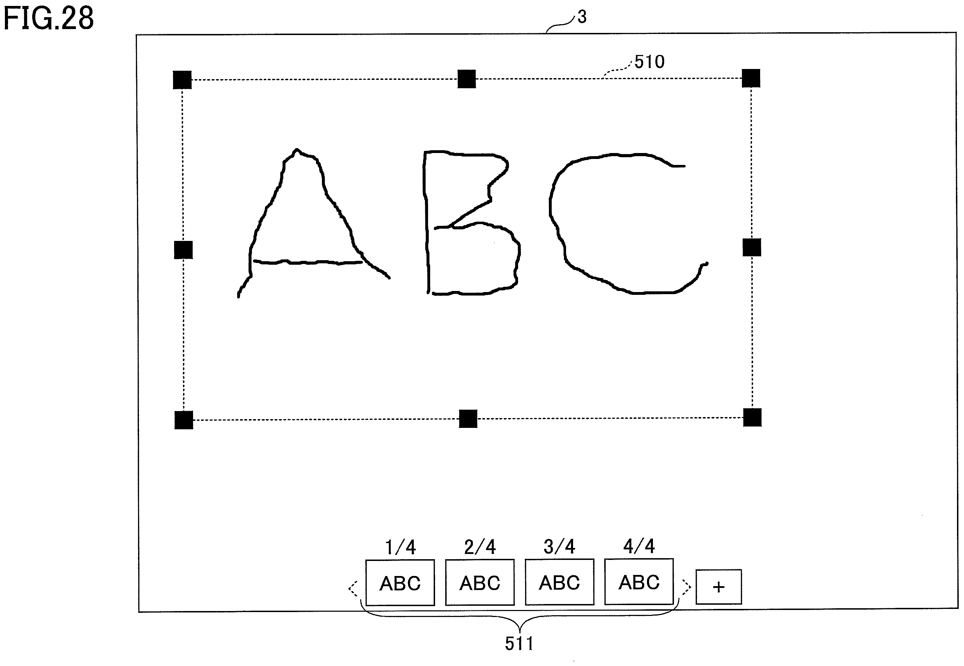

In FIG. 28, an example of a screen in a case where the paste-to-every-page 509d command is selected by a user is illustrated. For example, the following is a case where a file includes four pages of page data and the paste-buffer 326 stores strokes of "ABC". The following is a case where a user displayed a context menu 509 inside the frame 510 or outside the frame 510 and selected the paste-to-every-page 509d command.

The paste-processing unit 324 pastes the "ABC" onto a position indicated by an electronic pen 4 with respect to each page. A thumbnail 511 of each page is displayed on the bottom area of the display 3, and, as illustrated in FIG. 28, the "ABC" is pasted onto every page. The above function is useful, for example, when a user wants to write a text such as "FOR INTERNAL USE ONLY" on every page.

### <<To Compress To 75%>>

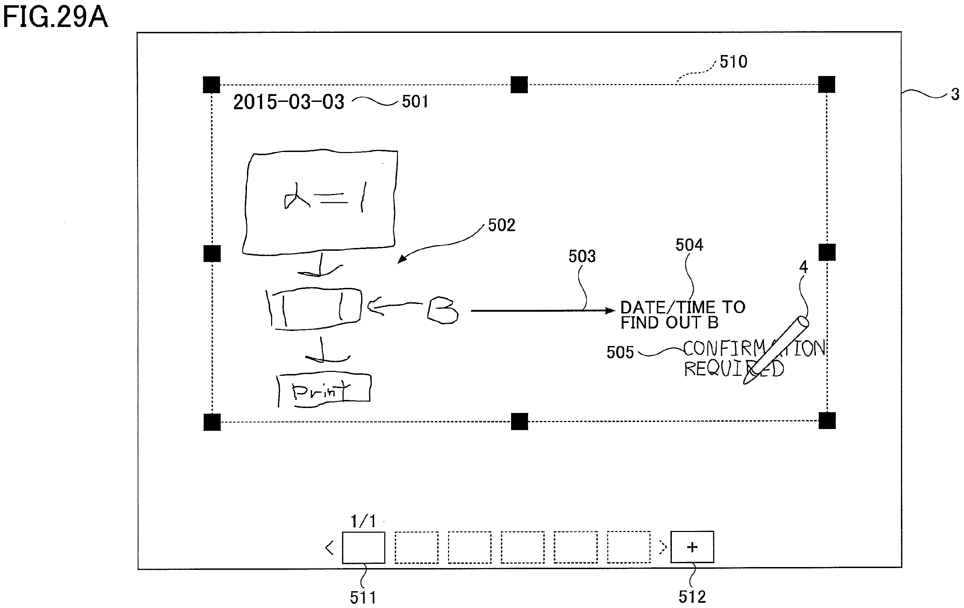

FIGS. 29A through 29C are examples of a drawing for explaining an operation for compression. FIG. 29A is an example of selected handwritten objects. The following is a case where, in such a situation as illustrated, a user displayed a context menu 509 inside the frame 510 and selected the compress-to-75% 509e command.

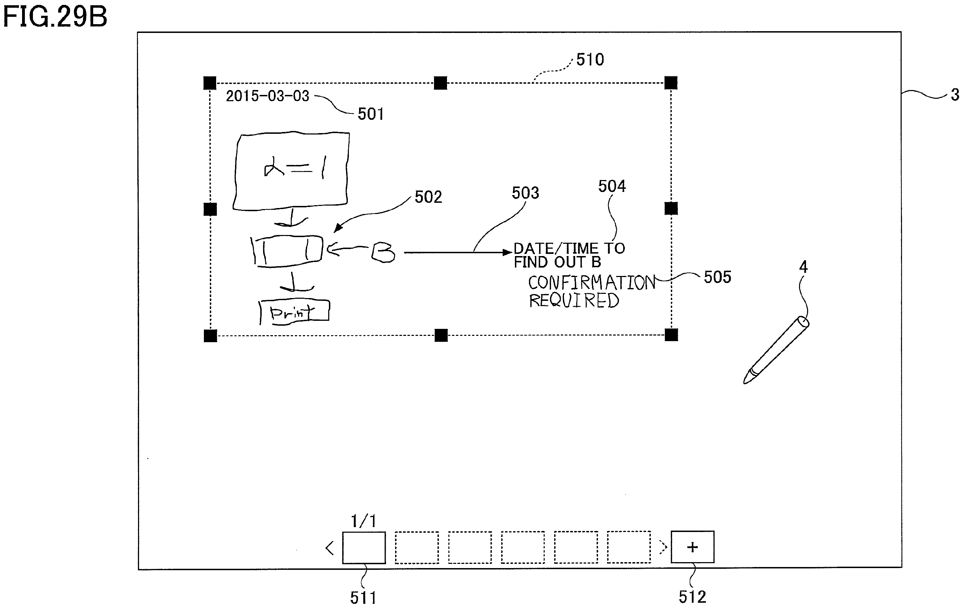

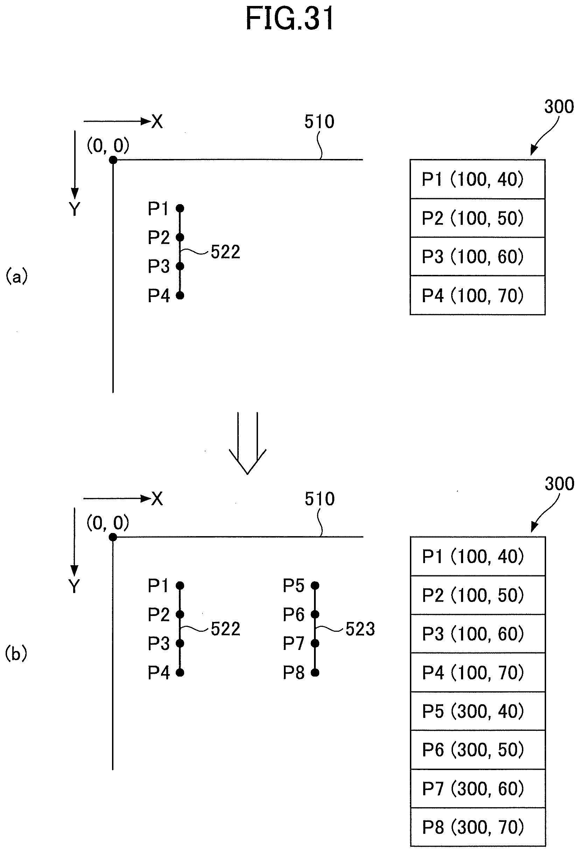

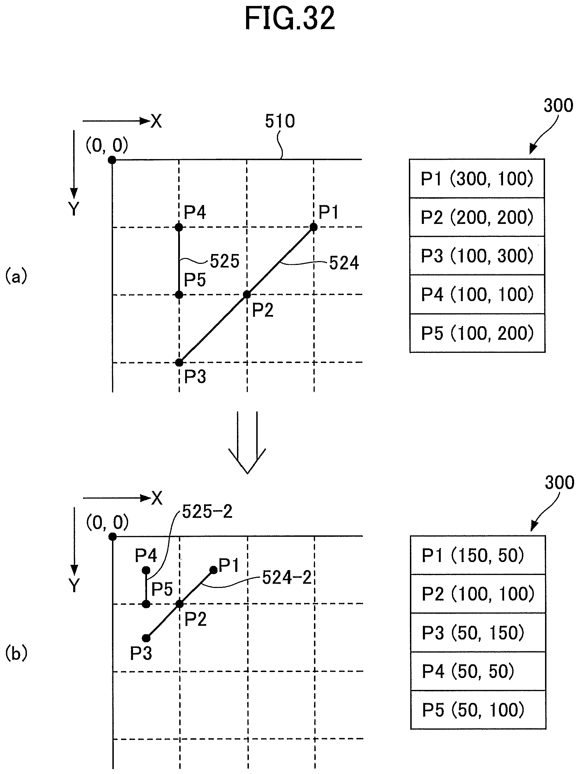

In FIG. 29B, an example of the handwritten objects compressed to 75% is illustrated. With the base point being set at the upper left corner of the frame 510, the sizes of the handwritten objects inside the frame 510 are compressed to 75%. Further, as the frame 510 remains being displayed, the selected state is maintained. The method for calculating coordinates is explained with reference to FIGS. 31 and 32.

Note that, with respect to an electronic pen 4 illustrated in FIGS. 29A and 29B, the illustrated position is an example. The electronic pen 4 may be anywhere as long as inside the frame 510 in FIG. 29A.

### <<To Compress To 50%>>

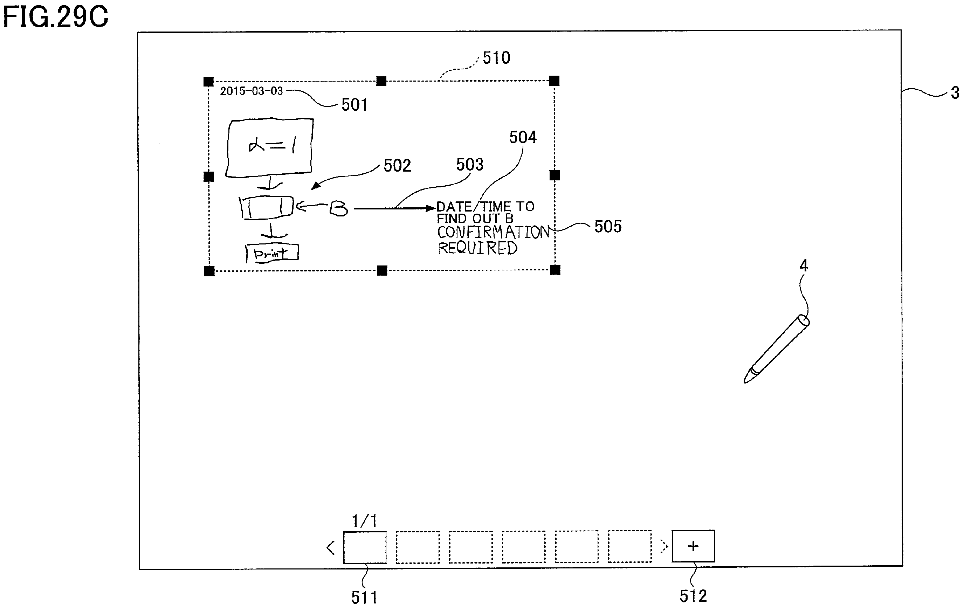

In FIG. 29C, an example of the handwritten objects compressed to 50% is illustrated. With the base point being set at the upper left corner of the frame 510, the sizes of the handwritten objects inside the frame 510 are compressed to 50%. Further, as the frame 510 remains being displayed, the selected state is maintained.

As illustrated in FIGS. 29B and 29C, in the present embodiment, even when multiple handwritten objects are depicted inside the frame 510, the selected-area scaling unit 325 compresses each handwritten object at a compression ratio and also compresses distance between handwritten objects at the compression ratio. Therefore, distance between each handwritten object is shortened, as if each handwritten object were originally written at the position of after-compression.

Conventionally, in a case where multiple objects are selected, application software provided with a function for compressing an object may have been able to compress each object but has had difficulty in compressing distance between each object in accordance with a compression ratio. In an electronic blackboard 2 according to the present embodiment, each handwritten object is configured with coordinate points, and therefore distance between handwritten objects can be changed in accordance with a compression ratio.

Further, in a case where image data is compressed by use of application software in general, distance between handwritten objects in the image data can be compressed, but image quality is decreased. Further, in a case where a user compresses a screen in accordance with a display magnification ratio, handwritten objects and distance can be compressed, but a text, etc., that is handwritten by a user is compressed as well.

As an electronic blackboard 2 according to the present embodiment compresses multiple handwritten objects altogether and is able to compress distance as well, a user can create blank space without separately compressing or moving a handwritten object. Further, when a user handwrites on an electronic blackboard 2, a user tends to draw comparatively large characters, etc., because characters easily become illegible depending on thickness of a line, etc. Hence, conventionally there has been a demand for performing compression because blank space is easily taken. An electronic blackboard 2 according to the present embodiment can attend to the above demand as well. Further, as a character, etc., is drawn comparatively in a large size, illegibility is not easily decreased even after being compressed.

In order to simply create blank space, a user may create a next page and handwrite on the page. However, increase in pages may cause difficulty in management or grasping contents. Further, there may be a case where a user wants to add information relating to an already-depicted handwritten object. An electronic blackboard 2 according to the present invention enables a user to add handwriting information without increasing pages and to add information relating to an already-depicted handwritten object.

Further, regarding an operation for creating blank space, a user can skip selecting an object, in a case of compressing an entire screen. Therefore, blank space may be created through two operations, i.e., (1) displaying a context menu 509 and (2) compressing to 50%.

### <<To Magnify To 120%>>

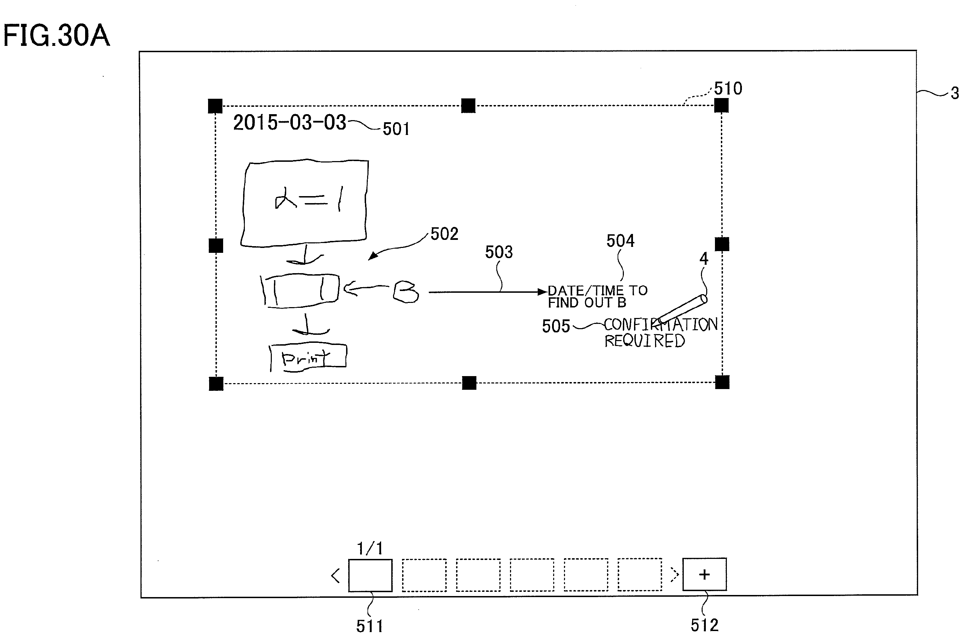

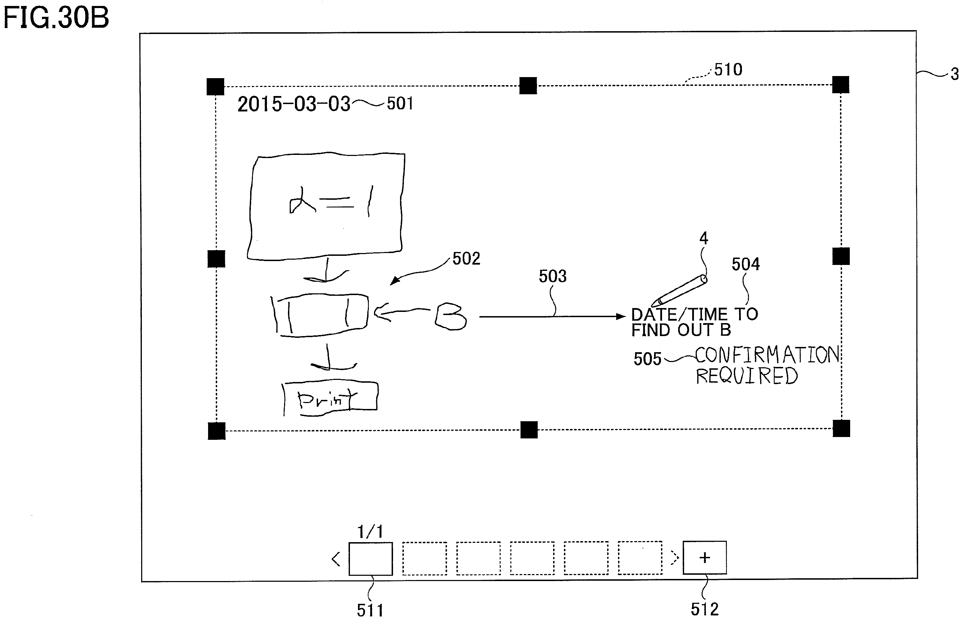

FIGS. 30A and 30B are examples of a drawing for explaining an operation for magnification. In FIG. 30A, an example of selected handwritten objects is illustrated. The following is a case where, in such a situation as illustrated, a user displayed a context menu 509 inside the frame 510 and selected the magnify-to-120% 509h command.

In FIG. 30B, an example of handwritten objects magnified to 120% is illustrated. With the base point being set at the upper left corner of the frame 510, the sizes of the handwritten objects inside the frame 510 are magnified to 120%. Further, as the frame 510 remains being displayed, the selected state is maintained.

Similarly, in a case of magnifying, each handwritten object is magnified and also distance between handwritten objects is broadened in accordance with a magnification ratio. Therefore, distance between each of the handwritten objects can be broadened, as if each handwritten object were originally handwritten at the position of after-magnification. For example, in a case where legibility of a character, etc. , is decreased because of compression of a handwritten object, legibility can be improved if being magnified.

### <Regarding Coordinate Arrangement Data>

The following description explains coordinate arrangement data in a case where a command on a context menu 509 is selected, with reference to FIGS. 31 and 32. The following is a case where a straight line 522 is depicted, as illustrated in FIG. 31 (a). Among constituting points that constitute the straight line 522, coordinates of points P1 through P4 are stored in the page data storing unit 300.

The following is a case where, in such a situation as illustrated, a user copied the straight line 522 and pasted on the right of the straight line 522 without making positional change with respect to Y-direction. As illustrated in FIG. 31 (b), the straight line 522 and a copied straight line 523 are displayed. Further, in the page data storing unit 300, coordinates of points P5 through P8, which constitute the copied straight line 523, are stored. As described above, because the stroke processing unit 32 performs processing of a handwritten object directly using coordinate data when executing a command, a copied handwritten object is treated as coordinate data, similarly to a handwritten object that is directly handwritten by a user.

Further, in FIG. 32 (a), straight lines 524 and 525 are depicted. Among points constituting the straight lines 524 and 525, coordinates of P1 through P3, P4, and P5 are stored in the page data storing unit 300.

The following is a case where, in such a situation as illustrated, a user selected the straight lines 524 and 525 and selected the compress-to-50% 509g command. As illustrated in FIG. 32 (b), the straight lines 524 and 525 are compressed with the base point being set at the upper left corner of the frame 510, such that straight lines 524-2 and 525-2 are depicted. Specifically, X-coordinates and Y-coordinates become 50% of the original values, respectively, with the origin being set at the base point. In the page data storing unit 300, the coordinates of the points P1 through P3 are updated to values of after-compression.

For example, length from the point P1 to the point P3 before being compressed with respect to the X-direction is 200 and with respect to the Y-direction is 200. Contrarily, length from the point P1 to the point P3 after being compressed with respect to the X-direction is 100 and with respect to the Y-direction is 100. Thus, the size of the straight line 524 is compressed to 50%.

Further, although difference between X-coordinates of the points P1 and P4 before being compressed is 200, difference between X-coordinates of the points P1 and P4 after being compressed is 100. Thus, distance between handwritten objects is compressed to 50% as well.

As described above, because the stroke processing unit 32 compresses a handwritten object directly using coordinates and depicts a handwritten object based on the coordinates, image quality is less likely to decrease. Similarly, in a case of magnification, a jaggy appearance, etc., due to magnification of an image is less likely to happen as well, and therefore a high quality handwritten object can be displayed even after being magnified.

### <Other Application Example>

The above is an explanation of the best mode for implementing the present invention, with reference to an embodiment. However, the present invention is not limited to the embodiment, and various variations and replacement may be made without departing from the scope of the present invention.

For example, a user may be able to move multiple objects enclosed in the frame 510 to another position.

Further, for example, a method for displaying a context menu 509 is not limited to long-pressing an electronic pen 4: the method may be pressing of a hard key provided on an electronic blackboard 2, touching of a predetermined position on a display 3 by use of an electronic pen 4 or a hand H, providing a predetermined operation (e.g., pressing a button, shaking, firmly gripping, etc.) of an electronic pen 4, etc.

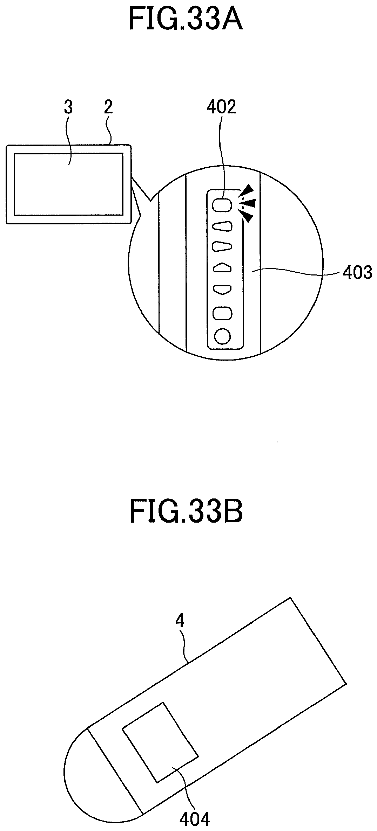

Further, as illustrated in FIGS. 33A and 33B, there may be a shortcut operation for calling a command in a context menu 509 through one operation. In FIG. 33A, a shortcut button 402 disposed on a side surface 403 of a display 3 is illustrated. The shortcut button 402 is associated with, for example, the compress-to-50% 509g command, such that the selected-area scaling unit 325 operates in response to pressing of the shortcut button 402. In the above case, all handwritten objects on a display 3 are selected. Therefore, a user can create blank space through one operation.

Further, as illustrated in FIG. 33B, a shortcut button 404 may be disposed on an electronic pen 4. In the above case, when a user presses the shortcut button 404, the contact detecting unit 24 detects the pressing and provides the stroke processing unit 32 with a notification, which enables the selected-area scaling unit 325 to operate.

Additionally, a shortcut button may be displayed on a display 3 as a soft key. Further, the selected-area scaling unit 325 may operate in response to a predetermined operation of an electronic pen 4. Note that a user can provide an electronic blackboard 2 with a setting for selecting a command to be associated with a shortcut button.

Note that, although only handwritten objects selected at a single time are stored with respect to the paste-buffer 326 in the explanation of the present embodiment, handwritten objects selected in different times may be stored. In the above case, the paste-processing unit 324 displays a list of the multiple handwritten objects that are stored in the paste-buffer 326, and pastes a handwritten object that is selected by a user from the list.

Further, although compression ratios and magnification ratios are fixed in the present embodiment, a user may be able to set a compression ratio and a magnification ratio.

The present international patent application is based on Japanese patent application No. 2015-113799 filed on June 4, 2015, the entire content of which is hereby incorporated by reference to claim the priority of Japanese patent application No. 2015-113799.

### [Reference Signs List]

- 1: image processing system
- 2: electronic blackboard
- 3: display
- 4: electronic pen
- 6: laptop PC
- 7: tele-conferencing terminal
- 9: communication network
- 28: video superimposing unit
- 30: image processing unit
- 32: stroke processing unit
- 33: UI image generating unit
- 34: background generating unit
- 322: copy-processing unit
- 323: cut-processing unit
- 324: paste-processing unit
- 325: selected-area scaling unit
- 509: context menu

## Claims

1. An information processing apparatus for displaying objects on a display device, the information processing apparatus comprising:
an operation accepting unit configured to accept an operation directed to the objects;
a coordinate changing unit configured to change coordinates of constituting points of a plurality of objects among the objects, respectively, in a case where the operation accepted by the operation accepting unit is a scaling operation directed to the plurality of objects; and
an object displaying unit configured to display, on the display device, the plurality of objects whose coordinates of the constituting points have been changed by the coordinate changing unit.

2. The information processing apparatus according to claim 1, wherein the coordinate changing unit scales distance between the plurality of objects so as to cause the plurality of objects to have shorter or longer distance, in addition to scaling sizes of the plurality of objects.

3. The information processing apparatus according to claim 1 or 2, the information processing apparatus comprising:
a coordinate storing unit configured to store coordinates of the constituting points of the objects,
wherein the coordinate changing unit scales coordinates stored in the coordinate storing unit with respect to the constituting points of the plurality of objects.

4. The information processing apparatus according to any one of claims 1 through 3, wherein, in a case where the operation accepted by the operation accepting unit is a compression operation directed to the plurality of objects, the coordinates changing unit compresses the plurality of objects and causes the plurality of objects to become closer to a predetermined base point, so as to create blank space, which is obtained as difference between an area including the plurality of objects before being compressed and an area including the plurality of objects after being compressed.

5. The information processing apparatus according to any one of claims 1 through 4, wherein, in a case where the operation accepted by the operation accepting unit is a magnification operation directed to the plurality of objects, the coordinates changing unit magnifies the plurality of objects and causes the plurality of objects to become farther from a predetermined base point.

6. The information processing apparatus according to any one of claims 1 through 5, wherein, in a situation where the plurality of objects are displayed on the display device, the operation accepting unit accepts, through a single operation, a scaling operation and designation with respect to the plurality of objects.

7. The information processing apparatus according to claim 6, wherein the coordinates changing unit scales coordinates of the constituting points of all of the objects displayed on the display device, in a case where the operation accepting unit accepts a scaling operation directed to the objects without accepting designation with respect to the objects.

8. The information processing apparatus according to any one of claims 1 through 7, the information processing apparatus comprising:
an object management unit configured to save the objects on one screen of the display device as one unit of page data and configured to manage multiple units of page data in a file, and
a first pasting unit configured to, in a case where the operation accepted by the operation accepting unit is a paste operation for pasting an object among the objects that is stored in a storing unit onto each of the multiple units of page data, paste the object onto every page in the file.

9. The information processing apparatus according to any one of claims 1 through 8, the information processing apparatus comprising: a copying unit configured to, in a case where the operation accepting unit accepts designation with respect to the objects and where the operation accepted by the operation accepting unit is a copy operation for copying the objects, copy the designated objects onto a storing unit.

10. The information processing apparatus according to any one of claims 1 through 9, the information processing apparatus comprising: a cutting unit configured to, in a case where the operation accepting unit accepts designation with respect to the objects and where the operation accepted by the operation accepting unit is a cut operation for cutting the objects, copy the designated objects onto a storing unit and configured to delete the designated objects from the display device.

11. The information processing apparatus according to any one of claims 1 through 9, the information processing apparatus comprising: a second pasting unit configured to cause an object among the objects that is stored in a storing unit to be displayed on the display device, in a case where the operation accepted by the operation accepting unit is a paste operation for pasting the object onto the display device.

12. The information processing apparatus according to any one of claims 1 through 11, the information processing apparatus comprising:
a storing unit configured to store an object among the objects on which a copy operation or a cut operation is accepted by the operation accepting unit,
wherein the operation accepting unit displays an operation item of a selectable operation from among a copy operation, a cut operation, a paste operation and a scaling operation, corresponding to which one of an inside or an outside of the frame for designating the objects is indicated and whether or not the object is stored in the storing unit.

13. An image displaying method performed by an information processing apparatus for displaying objects on a display device, the method comprising:
accepting, by an operation accepting unit, an operation directed to the objects;
changing, by a coordinate changing unit, coordinates of constituting points of a plurality of objects among the objects, respectively, in a case where the operation accepted by the operation accepting unit is a scaling operation directed to the plurality of objects; and
displaying, by an object displaying unit, on the display device, the plurality of objects whose coordinates of the constituting points have been changed by the coordinate changing unit.

14. A program for causing an information processing apparatus for displaying objects on a display device to provide a function as a mechanism, the mechanism comprising:
an operation accepting unit configured to accept an operation directed to the objects;
a coordinate changing unit configured to change coordinates of constituting points of a plurality of objects among the objects, respectively, in a case where the operation accepted by the operation accepting unit is a scaling operation directed to the plurality of objects; and
an object displaying unit configured to display, on the display device, the plurality of objects whose coordinates of the constituting points have been changed by the coordinate changing unit.
